# EUROPEAN PATENT APPLICATION

(11) **EP 4 700 567 A1**
(43) Date of publication of application: **25.02.2026**
(21) Application number: 23945652.8
(22) Date of filing: 08.11.2023
(51) Int. Cl.: G06F 8/61

(54) **DATA PROCESSING METHOD BASED ON BLOCKCHAIN, AND DEVICE AND READABLE STORAGE MEDIUM**

(30) Priority: 20.07.2023 CN 202310898387
(71) Applicant: Tencent Technology (Shenzhen) Company Limited, Shenzhen, Guangdong 518057 (CN)
(72) Inventor: HAN, Xueyang, Shenzhen, Guangdong 518057 (CN)
(74) Representative: Reddie & Grose LLP
(86) International application number: PCT/CN2023/130446
(87) International publication number: WO 2025/015772

(57) **Abstract**

A data processing method based on a blockchain, and a device and a readable storage medium. The method comprises: performing sharding processing on an intermediate code corresponding to a smart contract, so as to obtain A byte arrays, wherein A is a positive integer greater than 1 (S101); generating A program shards on the basis of the serial number of each byte array, the total number A of shards and each byte array, wherein each byte array corresponds to one program shard (S102); and sending the A program shards to a blockchain network, such that blockchain nodes in the blockchain network upload the A program shards to a chain, wherein the A program shards, which have been uploaded to the chain, are used for being assembled to generate a complete intermediate code (S103). The present method can improve the applicability of smart contract deployment, can improve the efficiency of smart contract installation, and can also avoid manual approval errors.

## Description

### RELATED APPLICATION

This application claims priority to Chinese Patent Application No. 202310898387.6, entitled "BLOCKCHAIN-BASED DATA PROCESSING METHOD, DEVICE, AND READABLE STORAGE MEDIUM" filed on July 20th, 2023.

### FIELD OF THE TECHNOLOGY

This application relates to the field of Internet technologies, and in particular, to a blockchain-based data processing method, a blockchain-based data processing apparatus, a computer device, a computer readable storage medium, and a computer program product.

### BACKGROUND OF THE DISCLOSURE

A smart contract is a blockchain technology-based automatic program, which can execute transactions and protocols without an intermediate, and has characteristics such as decentralization, transparency, security, and programmability. The smart contract needs to be deployed on a blockchain node. The existing technology includes the following two deployment methods. The first method is that the blockchain node packages the smart contract into a block, reaches a consensus on the block by using a consensus mechanism, and then successfully deploys the smart contract. However, to ensure security of a blockchain, the block needs to reach a consensus as soon as possible. Therefore, the blockchain limits a size of the block, and further limits the size of the smart contract. Therefore, the first method reduces applicability of deployment of the smart contract. The second method is to package source code of the smart contract to generate an installable program package. The program package is separately installed on each blockchain node. A manager of the blockchain node manually verifies validity of the program package. However, offline pre-installation of the program package of the smart contract not only reduces efficiency of installation of the smart contract, but also may have a manual approval error.

### SUMMARY

Embodiments of this application provide a blockchain-based data processing method, a device, and a readable storage medium, which can not only improve applicability of deployment of a smart contract, but also can improve efficiency of installation of the smart contract and avoid a manual review error.

According to an aspect of the embodiments of this application, a blockchain-based data processing method is provided. The method is performed by a service device. The method includes:
performing splitting processing on a first intermediate code corresponding to a smart contract to obtain A byte arrays, A being a positive integer greater than 1,
generating A program shards according to indices of the A byte arrays, a total shard quantity A, and the A byte arrays, each byte array corresponding to one program shard; and
transmitting the A program shards to a blockchain network to enable a blockchain node in the blockchain network to chain the A program shards to form A chained program shards, in order to generate a second intermediate code.

According to an aspect of the embodiments of this application, a blockchain-based data processing method is provided. The method is performed by a blockchain node. The method includes:
obtaining on-chain program shards that are initiated by a service device, and obtaining a total shard quantity A from the on-chain program shards, A being a positive integer greater than 1, the service device being configured to perform splitting processing on a first intermediate code corresponding to a smart contract to obtain A byte arrays, and each byte array corresponding to one program shard; and
counting a total quantity of the on-chain program shards, and performing assembling processing on byte arrays respectively included in the A program shards by using indices respectively included in the A program shards in response to that the total quantity is equal to the total shard quantity A, to obtain a second intermediate code.

According to an aspect of the embodiments of this application, a blockchain-based data processing apparatus is provided. The apparatus runs on a service device. The apparatus includes:
a code processing module, configured to perform splitting processing on a first intermediate code corresponding to a smart contract to obtain A byte arrays, A being a positive integer greater than 1;
a shard generating module, configured to generate A program shards according to indices of the A byte arrays, a total shard quantity A, and the A byte arrays, each byte array being respectively corresponding to one program shard; and
a shard transmitting module, configured to transmit the A program shards to a blockchain network to enable a blockchain node in the blockchain network to chain the A program shards to form A chained program shards, in order to generate a second intermediate code.

According to an aspect of the embodiments of this application, a blockchain-based data processing apparatus is provided. The apparatus runs on a blockchain node. The apparatus includes:
a shard obtaining module, configured to obtain on-chain program shards that are initiated by a service device, and obtain a total shard quantity A from the on-chain program shards, A being a positive integer greater than 1, the service device being configured to perform splitting processing on first intermediate code corresponding to a smart contract to obtain A byte arrays, and each byte array corresponding to one program shard; and
an array assembly module, configured to count a total quantity of the on-chain program shards, and perform assembling processing on byte arrays respectively included in the A program shards by using indices respectively included in the A program shards in response to that the total quantity is equal to the total shard quantity A, to obtain a second intermediate code.

According to an aspect of this application, a computer device is provided, including: a processor, a memory, and a network interface,
the processor is connected to the memory and the network interface, the network interface is configured to provide a data communication function, the memory is configured to store a computer program, and the processor is configured to call the computer program to enable the computer device to perform the blockchain-based data processing method in the embodiments of this application.

According to an aspect of the embodiments of this application, a computer-readable storage medium is provided. The computer-readable storage medium stores a computer program. The computer program is adapted to be loaded and executed by a processor and perform the blockchain-based data processing method in the embodiments of this application.

According to an aspect of the embodiments of this application, a computer program product is provided. The computer program product includes a computer program. The computer program is stored in a computer-readable storage medium. A processor of a computer device reads the computer program from the computer-readable storage medium, and the processor executes the computer program, whereby the computer device performs the blockchain-based data processing method in the embodiments of this application.

In this embodiment of this application, the service device may obtain A byte arrays by performing splitting processing on the first intermediate code corresponding to the smart contract. A is a positive integer greater than 1, that is, there are at least two byte arrays. It can be learned that, by performing splitting processing on the first intermediate code corresponding to the smart contract, a storage capacity occupied by the first intermediate code corresponding to the smart contract can be dispersed into storage capacities respectively occupied by A byte arrays. In such a dispersion mode, deployment of the smart contract that occupies a relatively large storage capacity becomes possible, and applicability of deployment of the smart contract can be improved. The service device may generate A program shards, each byte array corresponds to one program shard, and each program shard includes an index of a corresponding byte array, a total shard quantity A, and a corresponding byte array. The service device may transmit the A program shards to a blockchain network to enable a blockchain node in the blockchain network to chain the A program shards to a blockchain, the A chained program shards being configured to be assembled to generate a second intermediate code. By transmitting A program shards to the blockchain node, the blockchain node can still generate a complete intermediate code, and then run the complete intermediate code (that is, run the first intermediate code corresponding to the smart contract), to implement the deployment of the smart contract. It can be learned that, according to this application, a storage capacity occupied by the first intermediate code corresponding to the smart contract is not limited, and applicability of the deployment of the smart contract can be improved. In addition, according to this application, the first intermediate code corresponding to the smart contract can be prevented from being pre-installed on a blockchain node, the first intermediate code corresponding to the smart contract can be prevented from being approved manually, efficiency of installation of the smart contract can be improved, and a manual approval error can be avoided.

### BRIEF DESCRIPTION OF THE DRAWINGS

FIG. 1 is a schematic diagram of a system architecture according to an embodiment of this application.
FIG. 2 is a first schematic diagram of a blockchain-based data processing scenario according to an embodiment of this application.
FIG. 3 is a first schematic flowchart of a blockchain-based data processing method according to an embodiment of this application.
FIG. 4 is a second schematic diagram of a blockchain-based data processing scenario according to an embodiment of this application.
FIG. 5 is a schematic interactive diagram of a blockchain-based data processing method according to an embodiment of this application.
FIG. 6 is a second schematic flowchart of a blockchain-based data processing method according to an embodiment of this application.
FIG. 7 is a third schematic diagram of a blockchain-based data processing scenario according to an embodiment of this application.
FIG. 8 is a third schematic flowchart of a blockchain-based data processing method according to an embodiment of this application.
FIG. 9 is a fourth schematic flowchart of a blockchain-based data processing method according to an embodiment of this application.
FIG. 10 is a first schematic structural diagram of a blockchain-based data processing apparatus according to an embodiment of this application.
FIG. 11 is a second schematic structural diagram of a blockchain-based data processing apparatus according to an embodiment of this application.
FIG. 12 is a schematic structural diagram of a computer device according to an embodiment of this application.

### DESCRIPTION OF EMBODIMENTS

To facilitate understanding, part terms are first briefly explained below.
1. Blockchain: In a narrow sense, a blockchain is a form of linked data structure that takes a block as a unit. In a block, a transaction history obtained previously is checked by using a digital digest, which is suitable for the requirements of tamper resistance and extendibility in a distributed ledger scenario. In a broad sense, the blockchain alternatively refers to a distributed ledger technology implemented based on a blockchain structure, including distributed consensus, privacy and security protection, a peer to peer (P2P) communication technology, a network protocol, a smart contract, and the like. The goal of the blockchain is to establish a distributed ledger for data recording. This distributed ledger only allows data addition, but does not allow data deletion. An underlying structure of the ledger is essentially a linear linked list. The linked list is composed of chained blocks. Each successor block records a hash value of its predecessor block. Whether each block (and a transaction in the block) is valid can be quickly verified by calculating the hash value. If a node in a network proposes to add a new block, consensus confirmation has to be reached on the block through a consensus mechanism.
2. Blockchain node: A blockchain network categorizes nodes into a consensus node (which may alternatively be referred to as a core node) and a synchronous node (which may include a data node and a light node). The consensus node is responsible for consensus services of the entire blockchain network. The synchronous node is responsible for synchronizing ledger information of the consensus node, that is, synchronizing latest block data. Regardless of whether the node is the consensus node or the synchronous node, its internal structure includes a network communication component. The blockchain network is essentially a peer to peer network, where the consensus node or the synchronous node needs to communicate with other nodes in the blockchain network through the peer to peer component. Resources and services in the blockchain network are distributed over nodes, and information transmission and service implementation are performed directly between the nodes, without the intervention of an intermediary link or a centralized server (third party).
3. Block: A block is a data packet carrying transaction data on a blockchain network, and is a data structure marked with a timestamp and a hash value corresponding to a predecessor block. The block is verified by a consensus mechanism of a network and transactions in the block are confirmed accordingly. The block includes a block header and a block body. The block header may record metainformation of a current block, including data such as a current version number, a hash value corresponding to the predecessor block, a timestamp, a random number, and a hash value of a Merkle root. The block body may record detailed data generated in a period of time, which includes all transaction records that are verified and are generated during a block creating process of the current block and other information, and may be understood as a representation form of the ledger. In addition, detailed data of the block body may include a hash process of a Merkle tree to generate a unique Merkle root, which is then recorded in the block header.
4. Hash value: The hash value is alternatively referred to as Information eigenvalue or eigenvalue. The hash value is generated by applying a hash algorithm to input data of arbitrary length and producing a fixed-length output that serves as a cryptographic representation, cannot retrieve original input data by decrypting, and is a unidirectional encryption function. In a blockchain, each block (except an initial block) includes the hash value of a predecessor block. The hash value is a potential core foundation and an important aspect of a blockchain technology, which maintains the authenticity of recorded and viewed data and the integrity of the blockchain as a whole.
5. Public key and private key: A public key and a private key are a key pair obtained by using an algorithm. The public key is a public part of the key pair, and the private key is a non-public part. The public key is usually configured for encrypting data, verifying a digital signature, and the like. The algorithm can ensure that an obtained key pair is unique. When the key pair is used, if a segment of data is encrypted by using one key, the data has to be decrypted by using the other key. For example, if data is encrypted by using the public key, the data has to be decrypted by using the private key; and if data is encrypted by using the private key, the data has to be decrypted by using the public key. Otherwise, the data cannot be decrypted successfully.
6. Asymmetric signature: A signature algorithm includes two keys, a public key (a public key for short) and a private key (a private key for short). A public key and a private key are a pair. If data is signed by using the private key, a signature can only be verified by using the corresponding public key. Because two different keys are respectively used in a signature process and a signature verification process, this algorithm is referred to as asymmetric signature. A basic process in which an asymmetric signature implements confidential information exchange may be: A party A generates a pair of keys and publicizes a public key. When the party A needs to transmit a message to another role (a party B), the party A signs a confidential message by using a private key of the party A and then transmits the confidential message to the party B. Then, the party B performs signature verification on the signed message by using the public key of the party A.
7. Smart contract: A smart contract is a computer protocol intended to disseminate, verify, or execute a contract in an informatization mode. In a blockchain system, the smart contract (referred to as a contract for short) is a code that may be understood or executed by each node of the blockchain, and may execute any logic and obtain a result. In practical applications, the smart contract is managed and executed through a transaction on a blockchain. Each transaction is equivalent to one remote procedure call (RPC) request to the blockchain system. If the smart contract is equivalent to an executable program, the blockchain is equivalent to an operating system that provides a running environment. The blockchain may include a plurality of contracts, which are distinguished by identities (ID), identification numbers, or names. It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects.

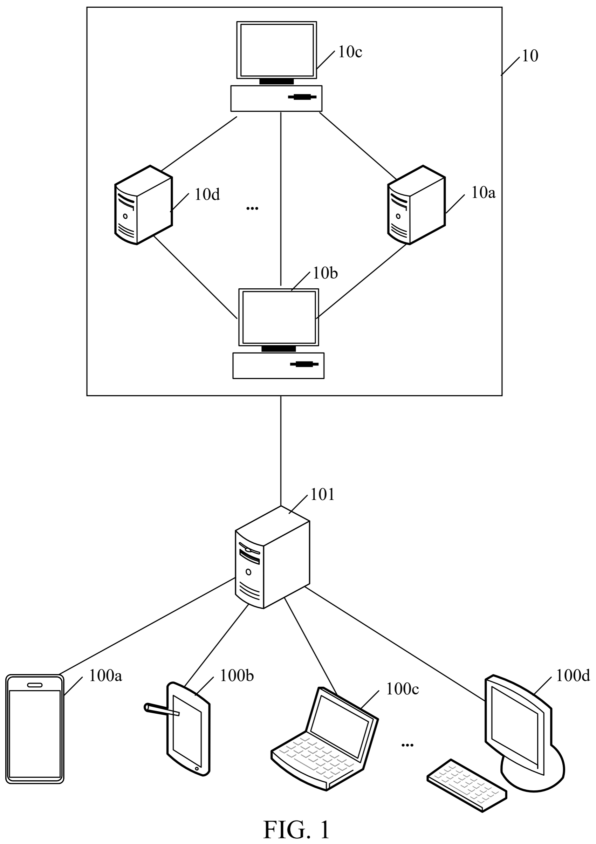

FIG. 1 is a schematic diagram of a system architecture according to an embodiment of this application. As shown in FIG. 1, the system architecture may include a service server 101, a terminal device cluster, and a blockchain network.

The blockchain network may include a blockchain node cluster 10. The blockchain node cluster 10 may include one or more blockchain nodes. A quantity of blockchain nodes in the blockchain node cluster 10 is not limited in this embodiment of this application. As shown in FIG. 1, the blockchain node cluster 10 may include a blockchain node 10a, a blockchain node 10b, and a blockchain node 10c, and a blockchain node 10d. During normal work, each blockchain node may receive data that is to be chained to a blockchain (for example, a program shard that is to be chained to a blockchain) transmitted by an off-chain device (which is referred to as a service device in this application, for example, the service server 101 and a terminal device in a terminal device cluster in this embodiment of this application), generate a block based on the received data that is to be chained to the blockchain, and then add the block to the blockchain. In a specific implementation of this application, relevant data such as user information (for example, an intermediate code corresponding to a smart contract and a program shard) is involved. When this embodiment of this application is applied to a specific product or technology, a user permission or consent needs to be obtained. Collection, use and processing of the relevant data need to comply with relevant laws, regulations, and standards of relevant countries and regions.

To ensure data intercommunication between various blockchain nodes, there may be a data connection between the blockchain nodes. For example, there is a data connection between the blockchain node 10a and the blockchain node 10c, there is a data connection between the blockchain node 10a and the blockchain node 10d, and there is a data connection between the blockchain node 10b and the blockchain node 10c. Data or a block may be transmitted between the blockchain nodes through the data connections. The data connections between the blockchain nodes may be based on node identifiers. Each blockchain node in the blockchain network has a node identifier corresponding to the blockchain node. Each of the blockchain nodes may store node identifiers of other blockchain nodes having a connection relationship with the blockchain, whereby obtained data or a generated block is subsequently broadcast to other blockchain nodes according to the node identifiers of the other blockchain nodes, for example, the blockchain node 10a may maintain a node identifier list, and the node identifier list stores node names and node identifiers of the other block nodes, as shown in Table 1.

**Table 1**

| Node name | Node identifier |
|---|---|
| Blockchain node 10b | AAAAA |
| Blockchain node 10c | BBBBB |
| ... | ... |
| Blockchain node 10d | CCCCC |

The node identifier may be an Internet protocol (IP) address between networks and any other piece of information that may be configured for identifying a node in the blockchain network. In Table 1, only the IP address is used as an example for description.

Assuming that a node identifier of the blockchain node 10a is FFFFFF, the blockchain node 10a may transmit transaction data to the blockchain node 10d by using the node identifier CCCCC, and the blockchain node 10d may determine, by using the node identifier FFFFFF, that the transaction data is transmitted by the blockchain node 10a. Similarly, the blockchain node 10d may transmit a consensus-pending block to the blockchain node 10c by using a node identifier BBBBBB, and the blockchain node 10c may determine, by using the node identifier CCCCCC, that the consensus-pending block is transmitted by the blockchain node 10d. The same is true for data transmission between other nodes. Therefore, details are not described one by one again.

A connection mode of the data connection is not limited, which may be a direct or indirect connection in a wired communication mode, or may be a direct or indirect connection in a wireless communication model, or may be other connection modes. This is not limited in this application.

The blockchain node 10a, the blockchain node 10b, the blockchain node 10c, the blockchain node 10d, and the like as shown in FIG. 1 may respectively have a mapping relationship with corresponding roles that need to access the blockchain network (that is, an entity object in a corresponding service scenario). The service scenario herein may specifically include an electronic bill scenario, a resource issuance scenario, a resource transfer scenario, a payment scenario, and the like. In this case, service data information in a corresponding service scenario may specifically include electronic bill information in the electronic bill scenario, resource issuance information in the resource issuance scenario, resource transfer information in the resource transfer scenario, an asset flow record in the payment scenario, and the like. Specific content of the service data information in the corresponding service scenario is not listed one by one herein.

The terminal device cluster may include one or more terminal devices. A quantity of terminal devices in the terminal device cluster is not limited in this embodiment of this application. As shown in FIG. 1, the terminal device cluster may include a terminal device 100a, a terminal device 100b, a terminal device 100c, ..., and a terminal device 100d. There may be a network connection between the terminal device clusters. For example, there may be a network connection between the terminal device 100a and the terminal device 100b. Simultaneously, there may be a network connection between any terminal device in the terminal device cluster and the service server 101. For example, there may be a network connection between the terminal device 100d and the service server 101. Simultaneously, there may be a network connection between any terminal device in the terminal device cluster and a blockchain network. For example, there may be a network connection between the terminal device 100b and the blockchain node 10c in the blockchain network. A connection mode of the communication connection is not limited, which may be a direct or indirect connection in a wired communication mode, or may be a direct or indirect connection in a wireless communication model, or may be other connection modes. This is not limited in this application.

Each terminal device in the terminal device cluster shown in FIG. 1 may be installed with an application client. When running on each terminal device, the application client may perform data interaction with the service server 101 shown in FIG. 1, that is, the network connection. The application client may alternatively perform data interaction with the blockchain network shown in FIG. 1. The application client may be an application client having a function of obtaining a source code corresponding to a smart contract, such as a video application, a digital resource application, an office software application, a navigation application, a shopping application, a financial planning application, a business application, or a browser. The application client may be an independent client, or an embedded sub-client integrated in a client (for example, an education client or a multimedia client). This is not limited herein.

Using the digital resource application as an example, the service server 101 may be a set including a plurality of servers, such as a background server and a data processing server corresponding to the digital resource application. Therefore, each terminal device may perform data transmission with the service server 101 by using the application client corresponding to the digital resource application. For example, each terminal device may add a blockchain address creation request to the service server 101 by using the application client of the digital resource application, and then the service server 101 may issue the blockchain address creation request to another terminal device or transmit the blockchain address creation request to a blockchain network.

The service server 101 may be a background server corresponding to the application client installed in the terminal device in the terminal device cluster. The system may include one or more service servers, and a quantity of service servers is not limited herein. The service server 101 shown in FIG. 1 may be connected to the blockchain network through a network, so as to exchange data through the network connection with the blockchain network.

The service device in this embodiment of this application may include any terminal device in the terminal device cluster shown in FIG. 1 and the service server 101. For ease of subsequent understanding and description, in this embodiment of this application, a device may be selected from the terminal device cluster or the service server 101 shown in FIG. 1 as a service device. For example, a terminal device 100c is used as the service device. When obtaining a code shard instruction for a first intermediate code corresponding to a smart contract, the service device (for example, the terminal device 100c) may perform splitting processing on the first intermediate code corresponding to the smart contract to obtain A byte arrays. The intermediate code and the source code described in this application both indicate the smart contract, and the intermediate code and the source code are different expression forms of the smart contract. A is a positive integer greater than 1. The A byte arrays include a byte array B_{c}, c is a positive integer, and c is less than or equal to A. The byte array B_{c} may represent any byte array of the A byte arrays.

A storage capacity/space occupied by a byte array obtained by performing splitting processing on the first intermediate code corresponding to the smart contract is less than a storage capacity occupied by the first intermediate code corresponding to the smart contract, and a larger A indicates a smaller storage capacity occupied by the byte array.

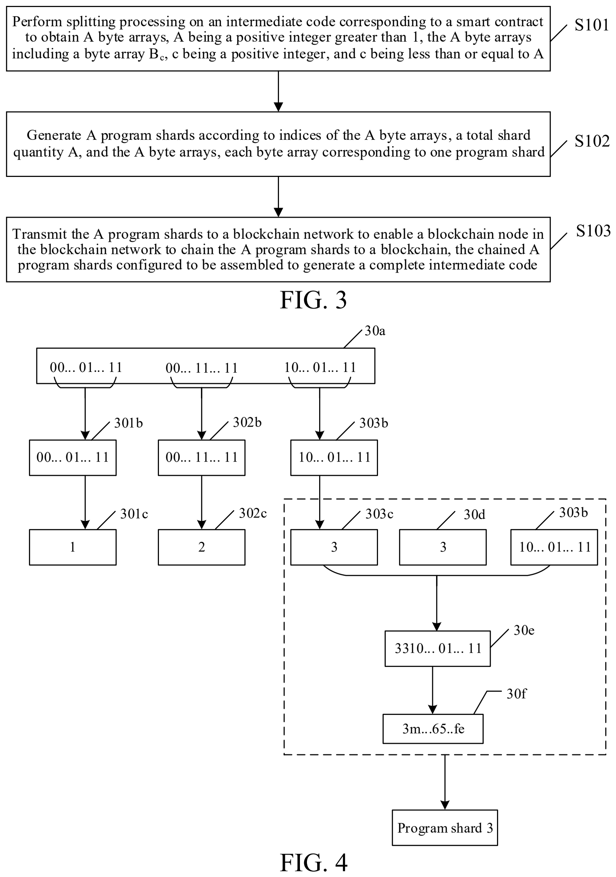

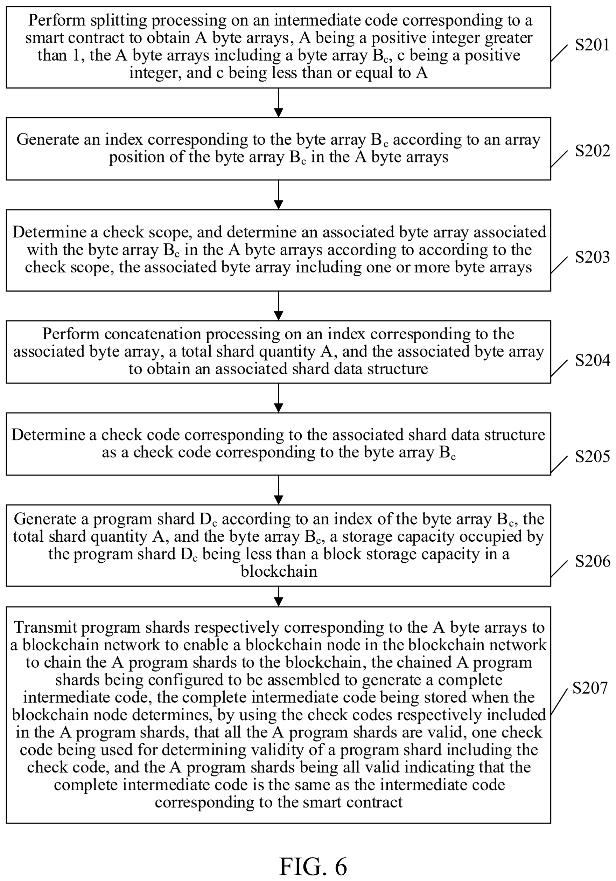

The service device may generate A program shards, and each byte array corresponds to one program shard. Using the byte array B_{c} as an example, the byte array B_{c} corresponds to a program shard D_{c}. The program shard D_{c} may represent any program shard of the A program shards. The service device generates the program shard D_{c}. The program shard D_{c} includes an index of the byte array B_{c}, a total shard quantity A, the byte array B_{c}, and a check code corresponding to the byte array B_{c}. In this embodiment of this application, the storage capacity occupied by the program shard D_{c} is less than a storage capacity of a block in the blockchain. Through the foregoing operations, the service device may generate program shards respectively corresponding to the A byte arrays, that is, A program shards. In this embodiment of this application, generation processes respectively corresponding to the index and the check code are not described in detail. Refer to descriptions in the embodiments respectively corresponding to FIG. 3 and FIG. 6 hereinafter.

Schematically, in a blockchain transaction mode, the service device transmits the program shard D_{c} to a blockchain network, whereby a blockchain node in the blockchain network adds the program shard D_{c} to a blockchain. In this embodiment of this application, the blockchain node first stores the program shard that has reached a consensus (that is, adds/chains the program shard to a blockchain), and performs assembling processing on byte arrays included in the A program shards by using indices respectively included in the A program shards when a total quantity of the on-chain program shards is A, to obtain a second intermediate code. In some embodiments of the application, the second intermediate code may be a complete intermediate code that has all the A on-chain/chained program shards, and may be used interchangeably with the complete intermediate code in this application. The complete intermediate code may be an intermediate code generated by assembling all the A on-chain/chained program shards but has not yet been validity-checked or validity-verified. The complete intermediate code is termed in the sense that it is reassembled from A on-chain/chained program shards, which is equal to the number A of the byte arrays divided from the first intermediate code. The first intermediate code may also referred to as an original intermediate code. For the blockchain node, the complete/second intermediate code needs to be checked to ensure validity of the complete intermediate code. Therefore, validity verification may be respectively performed on the A program shards by using the check codes respectively included in the A program shards. One check code is configured to determine validity of a program shard including the check code. For example: the check code included in the program shard D_{c} may be configured for determining the validity of the program shard D_{c}; the blockchain node stores the complete intermediate code when the A program shards are all have the validity; and the validity of all the A program shards may indicate that the complete intermediate code assembled by the A program shards is the same as the intermediate code corresponding to the smart contract.

It can be learned from the above that, in this embodiment of this application, splitting processing may be performed on a smart contract program (that is, the intermediate code corresponding to the smart contract) that is relatively complex in deployment and occupies relatively large space, and universality and applicability of deployment of the smart contract can be improved. In addition, in this embodiment of this application, by transmitting the program shard to the blockchain node in a blockchain transaction mode, the smart contract can be prevented from being pre-installed in the blockchain node offline, the smart contract can be prevented from being installed on the blockchain node in a manual verification mode, efficiency of installation of the smart contract can be improved, and an error caused by manual verification can be avoided.

The method according to this embodiment of this application may be performed by a computer device. The computer device includes, but is not limited to, a terminal device or a service server. The service server may be an independent physical server, or may be a server cluster including a plurality of physical servers or a distributed system, or may be a cloud server that provides basic cloud computing services such as a cloud database, a cloud service, cloud computing, a cloud function, cloud storage, a network service, cloud communication, a middleware service, a domain name service, a security service, a content delivery network (CDN), a big data, and an artificial intelligence platform. The terminal device includes, but is not limited to, a mobile phone, a computer, an intelligent voice interaction device, an intelligent household appliance, an in-vehicle terminal, an aircraft, and the like. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application.

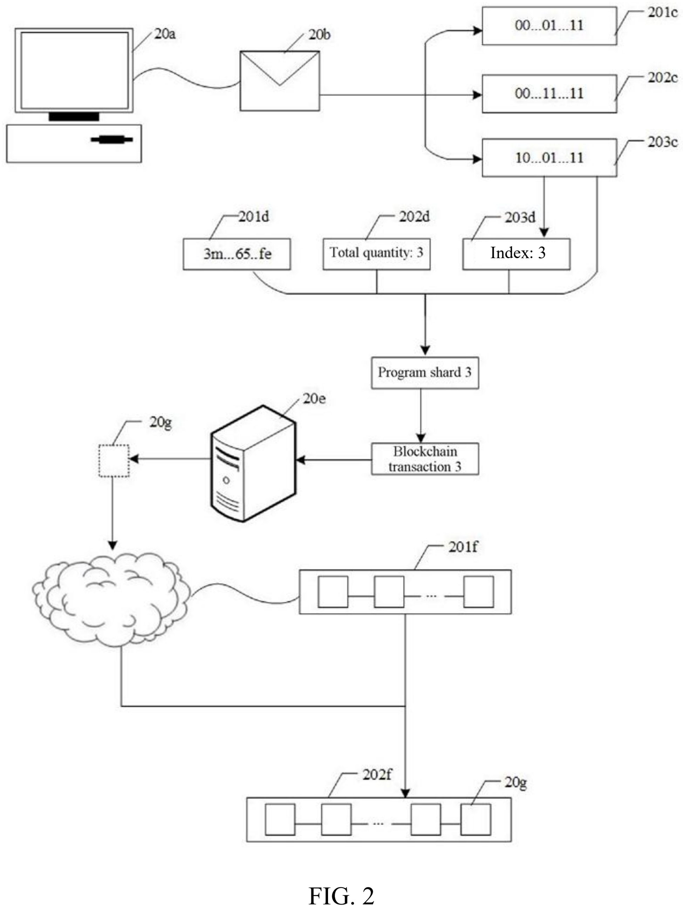

Further, FIG. 2 is a first schematic diagram of a blockchain-based data processing scenario according to an embodiment of this application. An implementation process of the data processing scenario may be performed in a service server, or may be performed in a terminal device, or may be performed in a blockchain node, or may be interactively performed in the terminal device, the service server, or the blockchain node. This is not limited herein. The terminal device may be any terminal device in the terminal device cluster in the embodiment corresponding to FIG. 1, the service server may be the service server 101 in the embodiment corresponding to FIG. 1, and the blockchain node may be any blockchain node in the blockchain node cluster in the embodiment corresponding to FIG. 1. FIG. 2 is described by using an example in which a terminal device implements this embodiment of this application. This embodiment of this application may be applied to various scenarios, including, but not limited to, a cloud technology, artificial intelligence, smart transportation, assisted driving, and the like.

As shown in FIG. 2, a terminal device 20a may perform splitting processing on an intermediate code 20b corresponding to a smart contract to obtain A byte arrays. The intermediate code 20b may be understood as a byte-code. The byte-code is a binary file including an execution program and including a sequence of operation codes (ops for short)/data pairs, and is an intermediate code. The intermediate code 20b is an oriented syntax, and is easy to be translated into an equivalent internal representation code of a source program of a target program. Understandability and degree of ease of generating a target code is between a source language (that is, a source code) and a target language (that is, the target code). A byte array may be understood as a group of byte-codes. Because the intermediate code 20b may be byte-codes, splitting processing is performed on the intermediate code 20b, that is, the intermediate code 20b may be divided into A groups of byte-codes, and each group of byte-codes is referred to as a byte array.

For ease of understanding and description, A is exemplified as 3 in FIG. 2. As shown in FIG. 2, the service device 20a generates three byte arrays, and the three byte arrays are respectively a byte array 201c, a byte array 202c, and a byte array 203c. The three byte arrays are all binary arrays. For example, the byte array 201c includes 00... 01... 11, the byte array 202c includes 00... 11... 11, and the byte array 203c includes 10... 01... 11. A length (that is, an occupied storage capacity) of the byte array is not limited in this embodiment of this application. The length of the byte array may be set according to a block storage capacity (that is, a storage capacity of one block, that is, storage space) in an actual application scenario, for example, set to be that the length of the byte array is less than the block storage capacity.

Processing processes of the service device 20a on the three byte arrays shown in FIG. 2 are the same, so the following describes by using an example in which the service device 20a processes the byte array 203c. For processing processes of the remaining two byte arrays, refer to the following descriptions. Details are not described one by one. As shown in FIG. 2, the service device 20a generates an index for the byte array 203c. The index has uniqueness and sequentiality. The index may indicate a sequence and a position of a byte array in an intermediate code corresponding to a smart contract. For example: The intermediate code corresponding to the smart contract is sequentially divided into three byte arrays (which are respectively the byte array 201c, the byte array 202c, and the byte array 203c). An index of the byte array 203c is 3, that is, it indicates that the byte array 203c is a third byte array. An expression mode of the index is not limited in this embodiment of this application, and may be set according to an actual application scenario. FIG. 2 exemplifies the index of the byte array 203c by using 3. The service device 20a generates a check code 201d corresponding to the byte array 203c. A check code generation process is not described in this embodiment of this application. Refer to descriptions in the embodiments respectively corresponding to FIG. 3 and FIG. 6 below. The check code 201d is a string of hash values, and is exemplified as 3m... 65..fe in FIG. 2.

Further, the service device 20a may generate a program shard (exemplified as a program shard 3 in FIG. 2) corresponding to the byte array 203c. The program shard 3 includes an index of the byte array 203c (exemplified as 3 in FIG. 2), a total shard quantity A (exemplified as 3 in FIG. 2), the byte array 203c, and a check code 201d corresponding to the byte array 203c. A storage capacity occupied by the program shard 3 is less than a block storage capacity in a blockchain. By using the foregoing process, the service device 20a may generate a program shard 1 corresponding to the byte array 201c and a program shard 2 corresponding to the byte array 202c, and storage capacities respectively occupied by the program shard 1 and the program shard 2 are both less than a block storage capacity.

Referring to FIG. 2, the service device 20a generates a blockchain transaction 3 including the program shard 3, and transmits the blockchain transaction 3 to a blockchain network. A blockchain node 20e located in a blockchain network obtains the blockchain transaction 3 (including the program shard 3) transmitted by the service device 20a. The blockchain node 20e adds the program shard 3 to the blockchain. Similarly, the service device 20a respectively transmits the program shard 1 and the program shard 2 to the blockchain network, and blockchain nodes (including the blockchain node 20e) in the blockchain network respectively add the program shard 1 and the program shard 2 to the blockchain. Specifically, as shown in FIG. 2, the blockchain node 20e belongs to a blockchain 201f, and the blockchain node 20e packages the blockchain transaction 3 into a pending block 20g. The blockchain node 20e broadcasts the pending block 20g to another blockchain node. Therefore, the another blockchain node may alternatively perform consensus processing on the pending block 20g and generate a consensus result. If the consensus result of the blockchain network for the pending block 20g is a consensus success result, the blockchain node 20e may store, that is, add, the pending block 20g to the blockchain 201f, to obtain a blockchain 202f.

The blockchain node 20g determines a quantity of on-chain program shards. When the total quantity of the on-chain program shards is A (that is, 3), the blockchain node 20e may assemble, by using indices respectively included in the three program shards, byte arrays respectively included in the three program shards, to obtain complete intermediate code. In an implementation, the blockchain node 20e may perform validity verification on the program shard 3 by using the check code 201d included in the program shard 3, to determine validity of the program shard 3. Similarly, the blockchain node 20e may perform validity check on the program shard 1 by using the check code included in the program shard 1, to determine validity of the program shard 1. The blockchain node 20e may perform validity check on the program shard 2 by using the check code included in the program shard 2, to determine validity of the program shard 2. If the three program shards all have the validity, the blockchain node stores the complete intermediate code. The fact that the three program shards all have the validity indicates that the complete intermediate code assembled by the three program shards is the same as the intermediate code 20b corresponding to the smart contract.

It can be learned from the above that when a storage capacity occupied by the intermediate code corresponding to the smart contract is greater than or equal to a block storage capacity, splitting processing is performed on the intermediate code corresponding to the smart contract, and then the storage capacity occupied by the intermediate code corresponding to the smart contract can be dispersed into storage capacities respectively occupied by A byte arrays. In such a dispersion mode, deployment of the smart contract that occupies a relatively large storage capacity becomes possible, and applicability of the deployment of the smart contract can be improved. By transmitting A program shards corresponding to the A byte arrays to the blockchain node, the blockchain node can assemble the complete intermediate code, and then run the complete intermediate code (that is, run the intermediate code corresponding to the smart contract). Therefore, according to this application, a storage capacity occupied by the intermediate code corresponding to the smart contract is not limited, and applicability of deployment of the smart contract can be improved. In addition, according to this application, the intermediate code corresponding to the smart contract can be prevented from being pre-installed on a blockchain node, the intermediate code corresponding to the smart contract can be prevented from being approved manually, efficiency of installation of the smart contract can be improved, and a manual approval error can be avoided.

Further, FIG. 3 is a first schematic flowchart of a blockchain-based data processing method according to an embodiment of this application. This embodiment of this application may be applied to various scenarios, including, but not limited to, a cloud technology, artificial intelligence, smart transportation, assisted driving, and the like. The data processing method may be performed by a service device. The service device may be the service server 101 in the system architecture shown in FIG. 1, or any terminal device in a terminal device cluster, or a service server 101 and a terminal device. As shown in FIG. 3, the data processing method may at least include the following operation S101 to operation S103.

Operation S101: Perform splitting processing on an intermediate code corresponding to a smart contract to obtain A byte arrays, A being a positive integer greater than 1, the A byte arrays including a byte array B_{c}, c being a positive integer, and c being less than or equal to A.

Specifically, encoding processing is performed on a source code corresponding to the smart contract to obtain the intermediate code corresponding to the smart contract, and a storage capacity occupied by the intermediate code corresponding to the smart contract is obtained. A block storage capacity is obtained, and the storage capacity occupied by intermediate code corresponding to the smart contract is compared with the block storage capacity. The block storage capacity represents a storage capacity of a block in a blockchain. If the storage capacity occupied by the intermediate code corresponding to the smart contract is equal to or greater than the block storage capacity, splitting processing is performed on the intermediate code corresponding to the smart contract according to the block storage capacity, to obtain A byte arrays.

To achieve a service function such as a resource transferring function, a resource querying function, and a resource destruction function, a device object (for example, a developer) may input or obtain a source code corresponding to the smart contract on a service device by using various languages. The source code (alternatively referred to as a source program) refers to a text file that is written according to a specific program design language specification and that is not compiled, and is a series of human-readable computer language instructions. To translate human-readable text (that is, the source code) into a binary instruction executable by a computer (including a blockchain node), the service device may perform encoding processing on the source code corresponding to the smart contract to obtain the intermediate code corresponding to the smart contract.

A purpose of the smart contract is not limited in this embodiment of this application, and may be set according to an actual application scenario. Therefore, a language and content of the source code are not limited, and an encoding mode and content of the intermediate code are not limited. The encoding mode includes, but is not limited to, compiling, packaging, and the like. A high-level language may be changed into a binary language identifiable by a computer by compiling. The computer only recognizes 1 and 0, and a compiling program changes a language familiar to people into the binary language.

This solution is applicable to a scenario in which a relatively large smart contract is deployed in a blockchain system. The so-called relatively large smart contract refers to a smart contract that occupies relatively large space, and may specifically refer to that the storage capacity occupied by the intermediate code corresponding to the smart contract is greater than or equal to the block storage capacity. The solution may be implemented by software, or hardware, or a combination of software and hardware, and a specific implementation process is as follows: obtaining, by a service device, a storage capacity occupied by an intermediate code corresponding to a smart contract, that is, space occupied by the intermediate code corresponding to the smart contract; obtaining a block storage capacity, the block storage capacity refers to a storage capacity, that is, storage space, of a block in a blockchain. To ensure security of a blockchain, the block needs to reach a consensus as soon as possible. Therefore, a size (that is, the storage capacity) of the block is limited. For example, the size of one block is one megabyte (MB for short), which limits the size of the smart contract. The service device compares the storage capacity occupied by the intermediate code corresponding to the smart contract with the block storage capacity. If the storage capacity occupied by the intermediate code corresponding to the smart contract is less than the block storage capacity, for example, the storage capacity occupied by the intermediate code corresponding to the smart contract is 10 Kbytes (KB for short) and the block storage capacity is 1 MB. Because the storage capacity occupied by the intermediate code corresponding to the smart contract is less than the block storage capacity, the service device may transmit the intermediate code corresponding to the smart contract to a blockchain network as a blockchain transaction. A processing process of a blockchain node in the blockchain network on the blockchain transaction is the same as the following processing process of using a program shard as a blockchain transaction. Details are not described herein again.

In another example, the storage capacity occupied by the intermediate code corresponding to the smart contract is 1 MB, and the block storage capacity is 1 MB. In this case, the storage capacity occupied by the intermediate code corresponding to the smart contract is equal to the block storage capacity. Because in addition to recording detailed blockchain transactions in a block body, a hash value of a parent block and a hash value of the current block further need to be recorded in a block header, the intermediate code corresponding to the smart contract cannot be directly packaged into the block. To resolve the foregoing problem, the service device may perform splitting processing on the intermediate code corresponding to the smart contract according to the block storage capacity to obtain A byte arrays. The foregoing splitting processing is performed in a byte sequence. FIG. 4 is a second schematic diagram of a blockchain-based data processing scenario according to an embodiment of this application. As shown in FIG. 4, the intermediate code 30a corresponding to the smart contract may be 00... 01... 1100... 11... 1110... 01... 11. The service device sequentially performs splitting processing on the intermediate code 30a to obtain 3 (that is, A is exemplified as 3) byte arrays. A first byte array is a byte array 301b, including 00... 01... 11, and an index of the byte array 301b is 1. A second byte array is a byte array 302b, including 00... 11... 11, and an index of the byte array 302b is 2. A third byte array is a byte array 303b, including 10... 01... 11, and an index of the byte array 303b is 3.

Operation S102: Generate A program shards according to indices of the A byte arrays, a total shard quantity A, and the A byte arrays, each byte array corresponding to one program shard.

The A byte arrays include a byte array B_{c}. Using the byte array B_{c} as an example, a program shard D_{c} may be generated according to the index of the byte array B_{c}, the total shard quantity A, and the byte array B_{c}.

Specifically, the index corresponding to the byte array B_{c} is generated according to an array position of the byte array B_{c} in the A byte arrays. A check scope is determined, and an associated byte array associated with the byte array B_{c} in the A byte arrays is determined according to the check scope. The associated byte array includes one or more byte arrays. Concatenation processing is performed on the index corresponding to the associated byte array, the total shard quantity A, and the associated byte array to obtain an associated shard data structure. A check code corresponding to the associated shard data structure is determined as a check code corresponding to the byte array B_{c}. A program shard D_{c} is generated according to the index of the byte array B_{c}, the total shard quantity A, the byte array B_{c}, and the check code corresponding to the byte array B_{c}.

A specific process for determining the associated byte array associated with the byte array B_{c} in the A byte arrays according to the check scope may include: if the check scope is a shard-wise check scope, determining the byte array B_{c} in the A byte arrays as the associated byte array associated with the byte array B_{c}. A specific process of performing concatenation processing on the index corresponding to the associated byte array, the total shard quantity A, and the associated byte array to obtain the associated shard data structure may include: performing concatenation processing on the index corresponding to the byte array B_{c}, the total shard quantity A, and the byte array B_{c} to obtain the associated shard data structure.

Specifically, hash processing is performed on the associated shard data structure to obtain a hash value of the associated shard data structure, and the hash value is determined as a check code of the associated shard data structure; or a device private key of the service device is obtained, signature processing is performed on the associated shard data structure by using the device private key to obtain a signature value of the associated shard data structure, and the signature value is determined as a check code of the associated shard data structure.

The service device may generate, according to an array position of each byte array in the A byte arrays, an index corresponding to each byte array. Referring to FIG. 4 again, the byte array 301b is a first byte array, so an index 301c of the byte array 301b may be 1; the byte array 302b is a second byte array, so an index 302c of the byte array 302b may be 2; and the byte array 303b is a third byte array, so an index 303c of the byte array 303b may be 3. FIG. 4 shows an example in which A=3, that is, a total shard quantity 30d is 3.

This application may provide three types of check scopes, which are respectively a shard-wise check scope, a group-wise check scope, and an overall check scope. The shard-wise check scope refers to that a blockchain node checks the program shards one by one when checking validity of the A program shards. The group-wise check scope refers to that a blockchain node checks a plurality of groups of program shards when checking validity of the A program shards. Usually, each group of program shards includes a plurality of program shards, the program shards within a group are sorted according to array positions, and groups are sorted according to the array positions. The overall check scope refers to that a blockchain node checks all program shards (that is, the A program shards) together when checking validity of the A program shards.

This embodiment of this application first describes the shard-wise check scope. Referring to FIG. 4 again, if the check scope is the shard-wise check scope, the service device determines, in three byte arrays, the byte array 301b as the associated byte array associated with the byte array 301b, determines the byte array 302b as the associated byte array associated with the byte array 302b, and determines the byte array 303b as the associated byte array associated with the byte array 303b. The service device performs concatenation processing on the index 301c (for example, 1 shown in FIG. 4) corresponding to the byte array 301b, the total shard quantity A (for example, 3 shown in FIG. 4), and the byte array 301b to obtain an associated shard data structure corresponding to the byte array 301b. Similarly, the service device performs concatenation processing on the index 302c (for example, 2 shown in FIG. 4) corresponding to the byte array 302b, the total shard quantity A, and the byte array 302b to obtain an associated shard data structure corresponding to the byte array 302b. The service device performs concatenation processing on the index 303c (for example, 3 shown in FIG. 4) corresponding to the byte array 303b, the total shard quantity A, and the byte array 303b to obtain an associated shard data structure 30e corresponding to the byte array 303b, exemplified as 3310... 01... 11 in FIG. 4.

Processes that the service device determines the associated byte array associated with the byte array B_{c} in the A byte arrays according to the group-wise check scope, and the service device determines the associated byte array associated with the byte array B_{c} in the A byte arrays according to the overall check scope are not described in this embodiment of this application. Refer to the descriptions of the embodiment corresponding to FIG. 6 below.

The service device determines check codes respectively corresponding to the A associated shard data structures. A check code determining method is not limited in this embodiment of this application, as long as the check code determining method has a check function. For example, the service device may perform an encryption operation, that is, a hash operation, on the associated shard data structure by using a cryptographic algorithm, to obtain a hash value of the associated shard data structure, and determine the hash value as a check code of the associated shard data structure. As shown in FIG. 4, the service device performs hash processing on the associated shard data structure 30e to obtain a hash value 30f, that is, 3m...65..fe in FIG. 4. Similarly, the service device may obtain a hash value corresponding to the byte array 301b and a hash value corresponding to the byte array 302b. The cryptographic algorithm is not limited in this embodiment of this application, and the cryptographic algorithm may be obtained according to an actual application scenario.

In some embodiments, the service device obtains a device private key, performs signature processing on the associated shard data structure by using the device private key to obtain a signature value of the associated shard data structure, and determines the signature value as a check code of the associated shard data structure. The device private key refers to a private key of the service device.

Further, as shown in FIG. 4, the service device generates a program shard 3. The program shard 3 includes the index 303c of the byte array 303b, the total shard quantity A, the byte array 303b, and a check code 30f corresponding to the byte array 303b. Similarly, the service device may generate a program shard 1. The program shard 1 includes the index 301c (that is, 1) of the byte array 301b, the total shard quantity A, the byte array 301b, and a check code corresponding to the byte array 301b. In addition, a program shard 2 may be generated. The program shard 2 includes the index 302c (that is, 2) of the byte array 302b, the total shard quantity A, the byte array 302b, and a check code corresponding to the byte array 302b.

It can be learned with reference to operation S101 and operation S102 that for a smart contract program (that is, an intermediate code) that occupies large space, in this embodiment of this application, the intermediate code corresponding to the smart contract may be divided into a plurality of program shards by using a splitting processing technology. Each program shard includes four parts, namely, an index, a total shard quantity, a byte array, and a check code. The index indicates a position of a program shard in a complete contract program. The total shard quantity A indicates a total quantity of program shards of the complete contract program, and is configured for subsequent program shard assembly check. A byte array in a program shard is a part of a contract program, and is configured for assembling the complete contract program. The check code is configured for performing an integrity check on the program shard to ensure that the program shard is not tampered with during transmission.

A size of the program shard is not limited in this embodiment of this application. The size of each program shard needs to be set according to an actual situation, and is related to a transaction size limitation and a block size limitation of a blockchain system. The program shard needs to ensure that occupied storage space is less than the foregoing limitation.

It can be learned from the above that this embodiment of this application provides a smart contract shard deployment solution. Through the technical solution, a smart contract that is relatively complex and occupies relatively large storage space can be deployed without changing the block size limitation.

Operation S103: Transmit the A program shards to a blockchain network to enable a blockchain node in the blockchain network to chain the A program shards to a blockchain, the A chained program shards configured to be assembled to generate a complete intermediate code.

Specifically, in a blockchain transaction mode, the service device transmits all A program shards to the blockchain network. If there are A byte arrays, the service device generates A program shards, and further transmits A blockchain transactions to the blockchain network. That is, one program shard corresponds to one blockchain transaction.

A feasible implementation is as follows: to reduce storage space occupation, the service device may perform compression processing on the A program shards respectively to obtain A program shard compressed packages. The A program shard compressed packages are respectively transmitted to the blockchain network in a blockchain transaction mode. Similarly, one program shard compressed package corresponds to one blockchain transaction. In this scenario, if the A program shard compressed packages all have an adding success result, and when obtaining the A program shard compressed packages, the blockchain node may first perform decompression processing on the A program shard compressed packages respectively to obtain the A program shards. A subsequent processing process is the same as the foregoing description, so details are not described again.

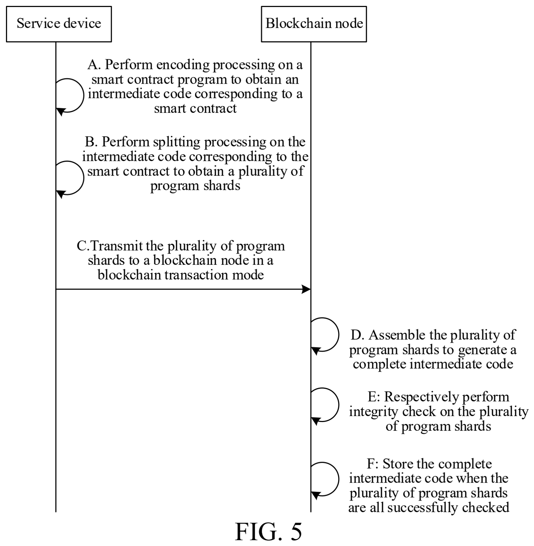

For the foregoing process, FIG. 5 is a schematic interactive diagram of a blockchain-based data processing method according to an embodiment of this application. As shown in FIG. 5, the method includes the following operations.

Operation A: The service device performs encoding processing on a smart contract program to obtain an intermediate code corresponding to a smart contract.

Specifically, an encoding mode includes, but is not limited to: compiling, or packaging, or compiling and packaging. The smart contract program refers to a source code corresponding to the smart contract.

Operation B: The service device performs splitting processing on the intermediate code corresponding to the smart contract to form a plurality of program shards.

Specifically, the service device performs splitting processing on the intermediate code corresponding to the smart contract by using a splitting processing tool. Each program shard has a unique index, and a size of the program shard is less than a block limit, and then the program shard can be successfully packaged into a block and subjected to consensus processing.

Operation C: The service device transmits the plurality of program shards to the blockchain node in a blockchain transaction mode.

Specifically, a blockchain application may be installed on the service device. The program shards are transmitted to the blockchain node in a blockchain transaction mode by using the blockchain application. The blockchain node packages the received program shards into a block, performs consensus processing, and stores the program shards into a local ledger after a consensus is reached.

Operation D: The blockchain node assembles the plurality of program shards to generate a complete intermediate code.

Specifically, after receiving all the program shards, the blockchain node sorts the program shards according to unique indices of the program shards, and then assembles the complete intermediate code according to a sequence, that is, the complete intermediate code.

Operation E: Respectively perform integrity check on the plurality of program shards.

Specifically, the blockchain node separately performs integrity check on the A program shards by using an integrity check algorithm. If all the A program shards are successfully checked, the blockchain node performs a next operation. If a program shard fails to be checked, the program shard that fails to be checked is discarded, and a new program shard is waited.

Operation F: Store the complete intermediate code when the plurality of program shards are successfully checked.

Specifically, storage of the complete intermediate code is off-chain storage, that is, the complete intermediate code does not need to be packaged into a block and chained to a blockchain.

It can be learned from the above that when a storage capacity occupied by the intermediate code corresponding to the smart contract is greater than or equal to a block storage capacity, splitting processing is performed on the intermediate code corresponding to the smart contract, and then the storage capacity occupied by the intermediate code corresponding to the smart contract can be dispersed into storage capacities respectively occupied by A byte arrays. In such a dispersion mode, deployment of the smart contract that occupies a relatively large storage capacity becomes possible, and applicability of the deployment of the smart contract can be improved. By transmitting A program shards corresponding to the A byte arrays to the blockchain node, the blockchain node can assemble the complete intermediate code, and then run the complete intermediate code (that is, run the intermediate code corresponding to the smart contract). Therefore, according to this application, a storage capacity occupied by the intermediate code corresponding to the smart contract is not limited, and applicability of deployment of the smart contract can be improved. In addition, according to this application, the intermediate code corresponding to the smart contract can be prevented from being pre-installed on a blockchain node, the intermediate code corresponding to the smart contract can be prevented from being approved manually, and efficiency of installation of the smart contract can be improved, and a manual approval error can be avoided.

FIG. 6 is a second schematic flowchart of a blockchain-based data processing method according to an embodiment of this application. The method may be performed by a service server (for example, the service server 101 shown in FIG. 1), or may be performed by a terminal device (for example, the terminal device 100a shown in FIG. 1), or may be performed by a blockchain node (for example, the blockchain node 10a shown in FIG. 1), or may be interactively performed by any two or three of the service server, the terminal device, and the blockchain node. For ease of understanding, this embodiment of this application is described by using an example in which the method is performed by the service device (specifically, the service server, or the terminal device, or the service server and the terminal device). As shown in FIG. 6, the method may at least include the following operation S201 to operation S207.

Operation S201: Perform splitting processing on an intermediate code corresponding to a smart contract to obtain A byte arrays, A being a positive integer greater than 1, the A byte arrays including a byte array B_{c}, c being a positive integer, and c being less than or equal to A.

Operation S202: Generate an index corresponding to the byte array B_{c} according to an array position of the byte array B_{c} in the A byte arrays.

For specific implementation processes of operation S201 and operation S202, please refer to the descriptions of operation S101 and operation S102 in the embodiment corresponding to FIG. 3. Details are not described herein again.

Operation S203: Determine a check scope, and determine an associated byte array associated with the byte array B_{c} in the A byte arrays according to according to the check scope, the associated byte array including one or more byte arrays.

In an implementation, if the check scope is a group-wise check scope, grouping processing is performed on the A byte arrays according to array positions respectively corresponding to the A byte arrays to obtain E byte array sets, E being a positive integer greater than 1, and E being less than A; A byte array set including the byte array B_{c} in the E byte array sets is determined as the associated byte array associated with the byte array B_{c}.

In another implementation, if a check scope is an overall check scope, the A byte arrays are determined as the associated byte array associated with the byte array B_{c}.

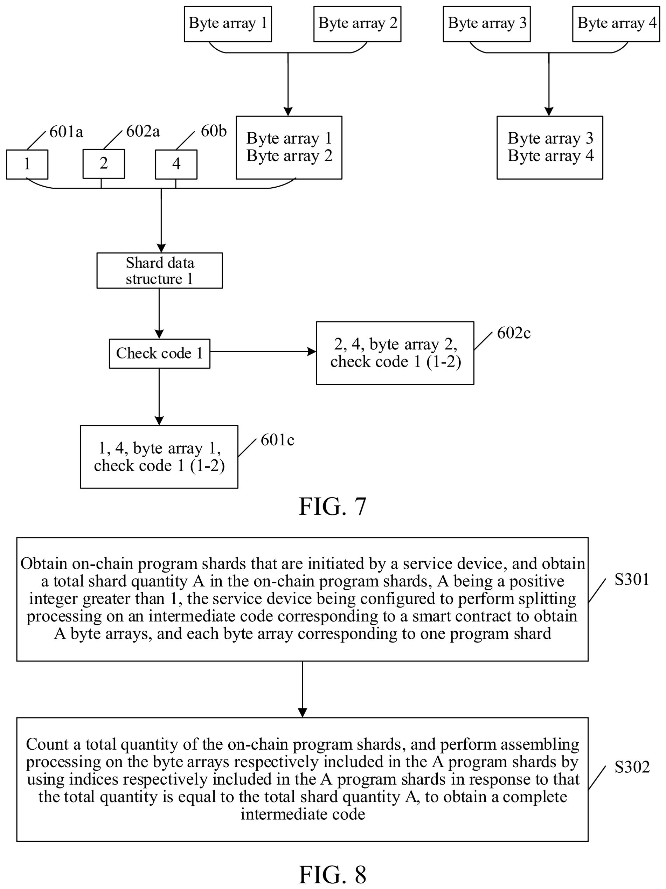

The embodiment corresponding to FIG. 3 describes a scenario in which a check scope is a shard-wise check scope. This operation describes the group-wise check scope and the overall check scope. FIG. 7 is a third schematic diagram of a blockchain-based data processing scenario according to an embodiment of this application. As shown in FIG. 7, A is equal to 4 in this operation as an example, that is, the service device generates four byte arrays, which are respectively a byte array 1, a byte array 2, a byte array 3, and a byte array 4. The byte array 1 is sorted first in the four byte arrays, so an index 601a of the byte array 1 may be set as 1; the byte array 2 is sorted second in the four byte arrays, so an index 602a of the byte array 2 may be set as 2; the byte array 3 is sorted third in the four byte arrays, so an index of the byte array 3 may be set as 3; and the byte array 4 is sorted fourth in the four byte arrays, so a number of the byte array 4 may be set as 4. Apparently, a total shard quantity is 4.

If the check scope is the group-wise check scope, the service device performs grouping processing on the four byte arrays according to the array positions respectively corresponding to the four byte arrays, to obtain E byte array sets. As shown in FIG. 7, E is exemplified as 2 in this operation. The service device divides the byte array 1 and the byte array 2 into a first byte array set, and divides the byte array 3 and the byte array 4 into a second byte data set. In this case, E is less than A. If E is equal to A, the check scope is the shard-wise check scope.

Referring to FIG. 7 again, in two byte array sets, the service device determines the byte array set (that is, the foregoing first byte array set) including the byte array 1 as an associated byte array associated with the byte array 1, determines the byte array set (that is, the foregoing first byte array set) including the byte array 2 as an associated byte array associated with the byte array 2, determines a byte array set (that is, the foregoing second byte array set) including the byte array 3 as an associated byte array associated with the byte array 3, and determines a byte array set (that is, the foregoing second byte array set) including the byte array 4 as an associated byte array associated with the byte array 4.

Referring to FIG. 7 further, if the check scope is the overall check scope, the service device determines all the four byte arrays in FIG. 7 as the associated byte array associated with the byte array 1, determines all the four byte arrays in FIG. 7 as the associated byte array associated with the byte array 2, determines all the four byte arrays in FIG. 7 as the associated byte array associated with the byte array 3, and determines all the four byte arrays in FIG. 7 as the associated byte array associated with the byte array 4.

Operation S204: Perform concatenation processing on an index corresponding to the associated byte array, a total shard quantity A, and the associated byte array to obtain an associated shard data structure.

In an implementation, if the check scope is the group-wise check scope, and the byte array set including the byte array B_{c} includes F byte arrays, the F byte arrays may be obtained, F being a positive integer, and F being less than A. Concatenation processing is performed on indices corresponding to the F byte arrays, the total shard quantity A, and the F byte arrays to obtain the associated shard data structure.

In another implementation, if the check scope is the overall check scope, concatenation processing is performed on indices respectively corresponding to the A byte arrays, the total shard quantity A, and the A byte arrays to obtain the associated shard data structure.

Please refer to FIG. 7 again. If the check scope is the group-wise check scope, the service device performs concatenation processing on an index 601a corresponding to the byte array 1, an index 602a corresponding to the byte array 2, a total shard quantity 60b, the byte array 1, and the byte array 2 to obtain an associated shard data structure corresponding to both the byte array 1 and the byte array 2. FIG. 7 uses the shard data structure 1 as an example. Similarly, the service device performs concatenation processing on the index corresponding to the byte array 3, the index corresponding to the byte array 4, the total shard quantity 60b, the byte array 3, and the byte array 4 to obtain an associated shard data structure corresponding to both the byte array 3 and the byte array 4.

If the check scope is an overall check scope, the service device performs concatenation on the index 601a corresponding to the byte array 1, the index 602a corresponding to the byte array 2, the index corresponding to the byte array 3, the index corresponding to the byte array 4, the total shard quantity 60b, the byte array 1, the byte array 2, the byte array 3, and the byte array 4 to obtain an associated shard data structure. The byte array 1, the byte array 2, the byte array 3, and the byte array 4 all correspond to the same associated shard data structure.

Operation S205: Determine a check code corresponding to the associated shard data structure as a check code corresponding to the byte array B_{c}.

Operation S206: Generate a program shard D_{c} according to an index of the byte array B_{c}, the total shard quantity A, and the byte array B_{c}, a storage capacity occupied by the program shard D_{c} being less than a block storage capacity in a blockchain.

Operation S207: Transmit program shards respectively corresponding to the A byte arrays to a blockchain network to enable a blockchain node in the blockchain network to chain the A program shards to the blockchain, the A chained program shards being configured to be assembled to generate a complete intermediate code, the complete intermediate code being stored when the blockchain node determines, by using the check codes respectively included in the A program shards, that all the A program shards are valid, one check code being used for determining validity of a program shard including the check code. The fact that the A program shards are all valid indicates that the complete intermediate code formed by assembling the A program shards is the same as the intermediate code corresponding to the smart contract.

For specific implementation processes of operation S205 to operation S207, please refer to the descriptions of operation S102 and operation S103 in the embodiment corresponding to FIG. 3. Details are not described herein again.

It can be learned from the above that when a storage capacity occupied by the intermediate code corresponding to the smart contract is greater than or equal to a block storage capacity, splitting processing is performed on the intermediate code corresponding to the smart contract, and then the storage capacity occupied by the intermediate code corresponding to the smart contract can be dispersed into storage capacities respectively occupied by A byte arrays. In such a dispersion mode, deployment of the smart contract that occupies a relatively large storage capacity becomes possible, and applicability of the deployment of the smart contract can be improved. By transmitting A program shards corresponding to the A byte arrays to the blockchain node, the blockchain node can still assemble the complete intermediate code, and then run the complete intermediate code (that is, run the intermediate code corresponding to the smart contract). Therefore, according to this application, a storage capacity occupied by the intermediate code corresponding to the smart contract is not limited, and applicability of deployment of the smart contract can be improved. In addition, according to this application, the intermediate code corresponding to the smart contract can be prevented from being pre-installed on a blockchain node, the intermediate code corresponding to the smart contract can be prevented from being approved manually, efficiency of installation of the smart contract can be improved, and a manual approval error can be avoided.

Further, FIG. 8 is a third schematic flowchart of a data processing method according to an embodiment of this application. The method may be performed by a service server (for example, the service server 101 shown in FIG. 1), or may be performed by a terminal device (for example, the terminal device 100a shown in FIG. 1), or may be performed by a blockchain node (for example, the blockchain node 10a shown in FIG. 1), or may be interactively performed by any two or three of the service server, the terminal device, and the blockchain node. For ease of understanding, this embodiment of this application is described by using an example in which the method is performed by a blockchain node. As shown in FIG. 8, the method may at least include the following operation S301 and operation S302.

Operation S301: Obtain on-chain program shards that are initiated by a service device, and obtain a total shard quantity A in the on-chain program shards, A being a positive integer greater than 1, the service device being configured to perform splitting processing on an intermediate code corresponding to a smart contract to obtain A byte arrays, and each byte array corresponding to one program shard.

Specifically, the program shards that are initiated by the service device are obtained, and the program shards are packaged into a pending block. Consensus processing is performed on the pending block to obtain a consensus result, and the pending block is chained to a blockchain if the consensus result is a consensus success result. If the pending block is successfully chained to the blockchain, the program shard is determined as an on-chain program shard, and the on-chain program shard is obtained.

The program shard transmitted by the service device is stored on the blockchain by a blockchain node, that is, packaged into a block. A feasible mode is that the A program shards are stored in all related blockchain nodes in a blockchain transaction mode. Another feasible mode is that the A program shards are only stored in part blockchain nodes through program shard routing processing. In the foregoing two feasible modes, all related blockchain nodes or part relevant blockchain nodes may store all program shards.

Still another feasible mode is that different blockchain nodes store different program shards. For example, there are three program shards in total. A program shard 1 is packaged into a block 1 by a blockchain node 1, and only the blockchain node 1 stores the program shard 1 to a local ledger when consensus of the block 1 is reached. The program shard 2 is packaged into a block 2 by the blockchain node 2, and only the blockchain node 2 stores the program shard 2 to the local ledger when the consensus of the block 2 is reached. The program shard 3 is packaged into a block 3 by the blockchain node 3, and only the blockchain node 3 stores the program shard 3 into the local ledger when consensus of the block 3 is reached. In this case, the blockchain node may store part program shards. However, the blockchain node 1 may transmit a first transaction synchronization request to the blockchain node 2 to request the blockchain node 2 to synchronize the program shard 2. Therefore, the blockchain node 1 may obtain the on-chain program shard 2. Similarly, the blockchain node 1 may transmit a second transaction synchronization request to the blockchain node 3 to request the blockchain node 3 to synchronize the program shard 3. Therefore, the blockchain node 1 may obtain the on-chain program shard 3. In this case, the blockchain node 1 may implement this embodiment of this application. Similarly, the blockchain node 2 and the blockchain node 3 may further transmit a transaction synchronization request for synchronizing program shards to another blockchain node.

Operation S302: Count a total quantity of the on-chain program shards, and perform assembling processing on the byte arrays respectively included in the A program shards by using indices respectively included in the A program shards in response to that the total quantity is equal to the total shard quantity A, to obtain a complete intermediate code.

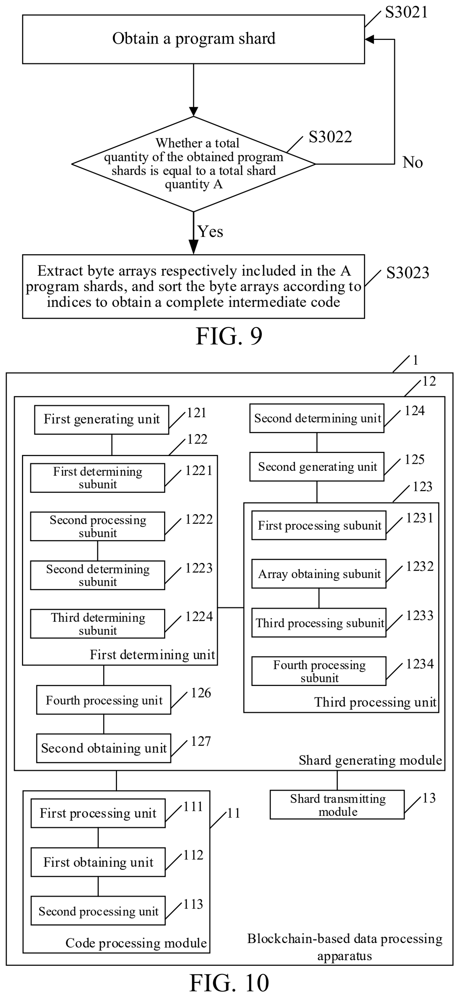

FIG. 9 is a fourth schematic flowchart of a blockchain-based data processing method according to an embodiment of this application. As shown in FIG. 9, the method includes operation S3021 to operation S3023.

Operation S3021: Obtain a program shard.

Specifically, a mode of obtaining a program shard by a blockchain node is not limited in this embodiment of this application. Refer to the description of operation S301. The program shard transmitted by a service device in a blockchain transaction mode may be obtained, or an on-chain program shard may be synchronized to another blockchain node.

Operation S3022: Determine whether a total quantity of the obtained program shards is equal to a total shard quantity A.

Specifically, the blockchain node checks a quantity of the program shards when receiving a program shard each time. If a total quantity of the received program shards is equal to a total shard quantity A formulated by the program shard, all program shards have been received, and therefore, program assembly may be performed.

Operation S3023: Extract byte arrays respectively included in the A program shards, and sort the byte arrays according to indices to obtain a complete intermediate code.

Specifically, a smart contract program (that is, an intermediate code corresponding to a smart contract) is subjected to splitting processing according to indices. Program shards received by a blockchain node may be disordered. Therefore, byte arrays of the program shards need to be sorted according to the indices to be assembled to obtain a complete intermediate code. The blockchain node stores the assembled complete intermediate code for subsequent decoding, calling, and querying.

The method further includes the following content: the A program shards include a program shard Gₕ, h is a positive integer, and h is less than or equal to A. According to the check code included in the program shard Gₕ, and validity check is performed on the program shard Gₕ to obtain a check result Iₕ.

Specifically, a check scope is determined, and an associated program shard associated with the program shard Gₕ is determined in the A program shards according to the check scope. The associated program shard includes one or more program shards. Concatenation processing is performed on an index included in the associated program shard, a total shard quantity A, and a byte array included in the associated program shard to obtain a to-be-checked shard data structure. A check result Iₕ is determined according to the to-be-checked shard data structure and a check code included in the program shard Gₕ.

A specific process of determining the associated program shard associated with the program shard Gₕ in the A program shards according to the check scope may include: if the check scope is a shard-wise check scope, determining the program shard Gₕ in the A program shards as the associated program shard associated with the program shard Gₕ; if the check scope is an overall check scope, determining the A program shards as associated program shards associated with the program shard Gₕ; if the check scope is a group-wise check scope, obtaining an index group carried in the check code included in the program shard Gₕ, the index group including one or more indices, and the index group including an index in the program shard Gₕ; and determining a program shard corresponding to the index group in the A program shards as the associated program shard associated with the program shard Gₕ.

A specific process of determining the check result Iₕ according to the to-be-checked shard data structure and the check code included in the program shard Gₕ may include: if the check code included in the program shard Gₕ is a hash value, performing hash processing on the to-be-checked shard data structure to obtain a to-be-checked hash value; comparing the to-be-checked hash value with the check code included in the program shard Gₕ; if the to-be-checked hash value is the same as the check code included in the program shard Gₕ, determining a check success result as the check result Iₕ; and if the to-be-checked hash value is different from the check code included in the program shard Gₕ, determining a check failure result as the check result Iₕ.

A specific process of determining the check result Iₕ according to the to-be-checked shard data structure and the check code included in the program shard Gₕ may include: if the check code included in the program shard Gₕ is a signature value, obtaining a device public key of the service device; performing signature verification processing on the check code included in the program shard Gₕ by using the device public key, to obtain a signature verification result; if the signature verification result is a signature verification success result, determining a check success result as the check result Iₕ; and if the signature verification result is a signature verification failure result, determining a check failure result as the check result Iₕ.

The method further includes the following content: if check results respectively corresponding to the A program shards are all check success results, storing a complete intermediate code. The fact that A check results are all check success results indicates that the complete intermediate code is the same as the intermediate code corresponding to the smart contract.

It can be learned from the above that when a storage capacity occupied by the intermediate code corresponding to the smart contract is greater than or equal to a block storage capacity, splitting processing is performed on the intermediate code corresponding to the smart contract, and then the storage capacity occupied by the intermediate code corresponding to the smart contract can be dispersed into storage capacities respectively occupied by A byte arrays. In such a dispersion mode, deployment of the smart contract that occupies a relatively large storage capacity becomes possible, and applicability of the deployment of the smart contract can be improved. By transmitting A program shards corresponding to the A byte arrays to the blockchain node, the blockchain node can still assemble the complete intermediate code, and then run the complete intermediate code (that is, run the intermediate code corresponding to the smart contract). Therefore, according to this application, a storage capacity occupied by the intermediate code corresponding to the smart contract is not limited, and applicability of deployment of the smart contract can be improved. In addition, according to this application, the intermediate code corresponding to the smart contract can be prevented from being pre-installed on a blockchain node, the intermediate code corresponding to the smart contract can be prevented from being approved manually, efficiency of installation of the smart contract can be improved, and a manual approval error can be avoided.

FIG. 10 is a first schematic structural diagram of a blockchain-based data processing apparatus according to an embodiment of this application. As shown in FIG. 10, a blockchain-based data processing apparatus 1 may run on a computer device. The computer device may be a service device. The blockchain-based data processing apparatus 1 may be a computer program (including a program code) running on the computer device. For example, the data processing apparatus is application software. The data processing apparatus may be configured to perform the corresponding operations in the method according to an embodiment of this application. As shown in FIG. 10, the blockchain-based data processing apparatus 1 may include: a code processing module 11, a shard generating module 12, and a shard transmitting module 13.

The code processing module 11 is configured to perform splitting processing on an intermediate code corresponding to a smart contract to obtain A byte arrays.

The shard generating module 12 is configured to generate A program shards according to indices of the A byte arrays, a total shard quantity A, and the A byte arrays, each byte array being respectively corresponding to one program shard.

The shard transmitting module 13 is configured to transmit the A program shards to a blockchain network to enable a blockchain node in the blockchain network to chain the A program shards to a blockchain, the on-chain A program shards being configured to be assembled to generate a complete intermediate code.

For implementations of specific functions of the code processing module 11, the shard generating module 12, and the shard transmitting module 13, refer to operation S101 to operation S103 in the embodiment corresponding to FIG. 3. Details are not described herein again.

Referring to FIG. 10 again, the code processing module 11 may include: a first processing unit 111, a first obtaining unit 112, and a second processing unit 113.

The first processing unit 111 is configured to perform encoding processing on a source code corresponding to a smart contract to obtain an intermediate code corresponding to the smart contract, and obtain a storage capacity occupied by the intermediate code corresponding to the smart contract.

The first obtaining unit 112 is configured to obtain a block storage capacity, and compare a storage capacity occupied by the intermediate code corresponding to the smart contract with the block storage capacity. The block storage capacity represents a storage capacity of a block in a blockchain.

The second processing unit 113 is configured to: in response to that the storage capacity occupied by the intermediate code corresponding to the smart contract is equal to or greater than the block storage capacity, perform splitting processing on the intermediate code corresponding to the smart contract according to the block storage capacity, to obtain A byte arrays.

For implementations of specific functions of the first processing unit 111, the first obtaining unit 112, and the second processing unit 113, refer to operation S101 in the embodiment corresponding to FIG. 3. Details are not described herein again.

Referring to FIG. 10 again, the A byte arrays include a byte array B_{c}, the byte array B_{c} corresponds to a program shard D_{c}, c is a positive integer, and c is less than or equal to A. The shard generating module 12 may include: a first generating unit 121, a first determining unit 122, a third processing unit 123, and a second determining unit 124.

The first generating unit 121 is configured to generate an index corresponding to the byte array B_{c} according to an array position of the byte array B_{c} in the A byte arrays.

The first determining unit 122 is configured to determine a check scope, and determine an associated byte array associated with the byte array B_{c} in the A byte arrays according to the check scope. The associated byte array includes one or more byte arrays.

The third processing unit 123 is configured to perform concatenation processing on an index corresponding to the associated byte array, a total shard quantity A, and the associated byte array to obtain an associated shard data structure.

The second determining unit 124 is configured to determine a check code corresponding to the associated shard data structure as a check code corresponding to the byte array B_{c}.

For implementations of specific functions of the first generating unit 121, the first determining unit 122, the third processing unit 123, and the second determining unit 124, refer to operation S202 to operation S205 in the embodiment corresponding to FIG. 6. Details are not described herein again.

Referring to FIG. 10 again, the first determining unit 122 may include: a first determining subunit 1221.

The first determining subunit 1221 is configured to: in response to that the check scope is a shard-wise check scope, determine the byte array B_{c} in the A byte arrays as the associated byte array associated with the byte array B_{c}.

The third processing unit 123 may include: a first processing subunit 1231.

The first processing subunit 1231 is configured to perform concatenation processing on an index corresponding to the byte array B_{c}, a total shard quantity A, and the byte array B_{c} to obtain an associated shard data structure.

For implementations of specific functions of the first determining subunit 1221 and the first processing subunit 1231, refer to operation S203 and operation S204 in the embodiment corresponding to FIG. 6. Details are not described herein again.

Referring to FIG. 10 again, the first determining unit 122 may include: a second processing subunit 1222 and a second determining subunit 1223.

The second processing subunit 1222 is configured to: in response to that the check scope is a group-wise check scope, perform grouping processing on the A byte arrays according to the array positions respectively corresponding to the A byte arrays to obtain E byte array sets, E being a positive integer greater than 1, and E being less than A.

The second determining subunit 1223 is configured to determine a byte array including the byte array B_{c} in the E byte array sets as the associated byte array associated with the byte array B_{c}.

The third processing unit 123 may include: an array obtaining subunit 1232 and a third processing subunit 1233.

The array obtaining subunit 1232 is configured to obtain F byte arrays from the byte array set including the byte array B_{c}, F being a positive integer, and F being less than A.

The third processing subunit 1233 is configured to perform concatenation processing on indices corresponding to the F byte arrays, the total shard quantity A, and the F byte arrays to obtain the associated shard data structure.

For implementations of specific functions of the second processing subunit 1222, the second determining subunit 1223, the array obtaining subunit 1232, and the third processing subunit 1233, refer to operation S203 and operation S204 in the embodiment corresponding to FIG. 6. Details are not described herein again.

Referring to FIG. 10 again, the first determining unit 122 may include: a third determining subunit 1224.

The third determining subunit 1224 is configured to: in response to that the check scope is an overall check scope, determine the A byte arrays as an associated byte arrays associated with the byte array B_{c}.

The third processing unit 123 may include: a fourth processing subunit 1234.

The fourth processing subunit 1234 is configured to perform concatenation processing on indices respectively corresponding to the A byte arrays, the total shard quantity A, and the A byte arrays to obtain the associated shard data structure.

For implementations of specific functions of the third determining subunit 1224 and the fourth processing subunit 1234, refer to operation S203 and operation S204 in the embodiment corresponding to FIG. 6. Details are not described herein again.

Referring to FIG. 10 again, the shard generating module 12 may include: a fourth processing unit 126 and a second obtaining unit 127.

The fourth processing unit 126 is configured to perform hash processing on the associated shard data structure to obtain a hash value of the associated shard data structure, and determine the hash value as a check code of the associated shard data structure; or

the second obtaining unit 127 is configured to obtain a device private key of the service device, perform signature processing on the associated shard data structure by using the device private key to obtain a signature value of the associated shard data structure, and determine the signature value as the check code of the associated shard data structure.

For implementations of specific functions of the fourth processing unit 126 and the second obtaining unit 127, refer to operation S102 in the embodiment corresponding to FIG. 3. Details are not described herein again.

It can be learned from the above that when the storage capacity occupied by the intermediate code corresponding to the smart contract is greater than or equal to the block storage capacity, by transmitting the A program shards respectively to a blockchain node respectively, the blockchain node can still assemble a complete intermediate code, and then run the complete intermediate code (that is, run the intermediate code corresponding to the smart contract). Therefore, according to this application, the storage capacity occupied by the intermediate code corresponding to the smart contract is not limited, and applicability of deployment of the smart contract can be improved. In addition, according to this application, the intermediate code corresponding to the smart contract can be prevented from being pre-installed on a blockchain node, the intermediate code corresponding to the smart contract can be prevented from being approved manually, efficiency of installation of the smart contract can be improved, and a manual approval error can be avoided.

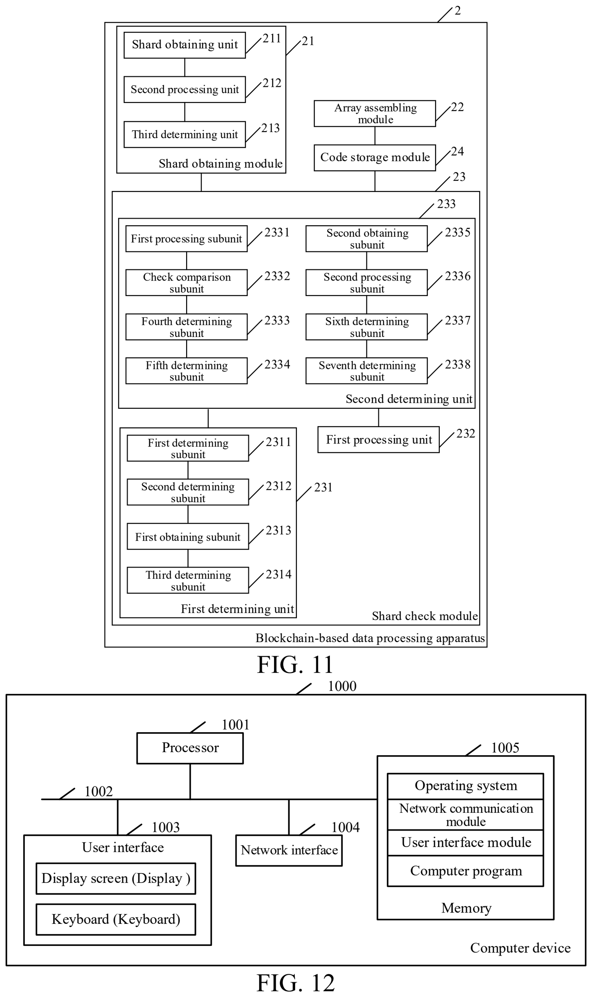

FIG. 11 is a second schematic structural diagram of a blockchain-based data processing apparatus according to an embodiment of this application. As shown in FIG. 11, a blockchain-based data processing apparatus 2 may run on a computer device. The computer device may be a blockchain node. The blockchain-based data processing apparatus 2 may be a computer program (including a program code) running on the computer device. For example, the data processing apparatus is application software. The data processing apparatus may be configured to perform the corresponding operations in the method according to an embodiment of this application. As shown in FIG. 11, the blockchain-based data processing apparatus 2 may include: a shard obtaining module 21 and an array assembly module 22.

The shard obtaining module 21 is configured to obtain on-chain program shards that are initiated by a service device, and obtain a total shard quantity A in the on-chain program shards, A being a positive integer greater than 1, the service device being configured to perform splitting processing on an intermediate code corresponding to a smart contract to obtain A byte arrays, and each byte array corresponding to one program shard.

The array assembly module 22 is configured to count a total quantity of the on-chain program shards, and perform assembling processing on byte arrays respectively included in the A program shards by using the indices respectively included in the A program shards in response to that the total quantity is equal to the total shard quantity A, to obtain a complete intermediate code.

For implementations of specific functions of the shard obtaining module 21 and the array assembly module 22, refer to operation S301 and operation S302 in the embodiment corresponding to FIG. 8. Details are not described herein again.

Referring to FIG. 11, the A program shards include a program shard Gₕ, h is a positive integer, and h is less than or equal to A. The blockchain-based data processing apparatus 2 may further include: a shard check module 23 and a code storage module 24.

The shard check module 23 is configured to perform validity verification on the program shard Gₕ according to a check code included in the program shard Gₕ to obtain a check result Iₕ.

The code storage module 24 is configured to store the complete intermediate code in response to that check results respectively corresponding to the A program shards are all check success results. The fact that A check results are all check success results indicates that the complete intermediate code is the same as the intermediate code corresponding to the smart contract.

For implementations of specific functions of the shard check module 23 and the code storage module 24, refer to operation S302 in the embodiment corresponding to FIG. 8. Details are not described herein again.

Referring to FIG. 11 again, the shard check module 23 may include: a first determining unit 231, a first processing unit 232, and a second determining unit 233.

The first determining unit 231 is configured to determine a check scope, and determine an associated program shard associated with the program shard Gₕ in the A program shards according to the check scope. The associated program shard includes one or more program shards.

The first processing unit 232 is configured to perform concatenation processing on an index included in the associated program shard, the total shard quantity A, and a byte array included in the associated program shard to obtain a to-be-checked shard data structure.

The second determining unit 233 is configured to determine the check result Iₕ according to the to-be-checked shard data structure and a check code included in the program shard Gₕ.

For implementations of specific functions of the first determining unit 231, the first processing unit 232, the second determining unit 233, refer to operation S302 in the embodiment corresponding to FIG. 8. Details are not described herein again.

Referring to FIG. 11 again, the first determining unit 231 may include: a first determining subunit 2311, a second determining subunit 2312, a first obtaining subunit 2313, and a third determining subunit 2314.

The first determining subunit 2311 is configured to: in response to that the check scope is a shard-wise check scope, determine the program shard Gₕ as the associated program shard associated with the program shard Gₕ in the A program shards.

The second determining subunit 2312 is configured to: in response to that the check scope is an overall check scope, determine the A program shard as the associated program shard associated with the program shard Gₕ.

The first obtaining subunit 2313 is configured to: in response to that the check scope is a group-wise check scope, obtain an index group carried in the check code included in the program shard Gₕ, the index group including one or more indices, and the index group including an index in the program shard Gₕ.

The third determining subunit 2314 is configured to determine a program shard corresponding to the index group in the A program shards as the associated program shard associated with the program shard Gₕ.

For implementations of specific functions of the first determining subunit 2311, the second determining subunit 2312, the first obtaining subunit 2313, and the third determining subunit 2314, refer to operation S302 in the embodiment corresponding to FIG. 8. Details are not described herein again.

Referring to FIG. 11 again, the second determining unit 233 may include: a first processing subunit 2331, a check comparison subunit 2332, a fourth determining subunit 2333, and a fifth determining subunit 2334.

The first processing subunit 2331 is configured to: in response to that the check code included in the program shard Gₕ is a hash value, perform hash processing on the to-be-checked shard data structure to obtain a to-be-checked hash value.

The check comparison subunit 2332 is configured to compare the to-be-checked hash value with the check code included in the program shard Gₕ.

The fourth determining subunit 2333 is configured to: in response to that the to-be-checked hash value is the same as the check code included in the program shard Gₕ, determine a check success result as the check result Iₕ.

The fifth determining subunit 2334 is configured to: in response to that the to-be-checked hash value is different from the check code included in the program shard Gₕ, determine a check failure result as the check result Iₕ.

For implementations of specific functions of the first processing subunit 2331, the check comparison subunit 2332, the fourth determining subunit 2333, and the fifth determining subunit 2334, refer to operation S302 in the embodiment corresponding to FIG. 8. Details are not described herein again.

Referring to FIG. 11 again, the second determining unit 233 may include: a second obtaining subunit 2335, a second processing subunit 2336, a sixth determining subunit 2337, and a seventh determining subunit 2338.

The second obtaining subunit 2335 is configured to: in response to that the check code included in the program shard Gₕ is a signature value, obtain a device public key of the service device.

The second processing subunit 2336 is configured to perform signature verification processing on the check code included in the program shard Gₕ by using the device public key, to obtain a signature verification result.

The sixth determining subunit 2337 is configured to: in response to that the signature verification result is a signature verification success result, determine a check success result as the check result Iₕ.

The seventh determining subunit 2338 is configured to: in response to that the signature verification result is a signature verification failure result, determine a check failure result as the check result Iₕ.

For implementations of specific functions of the second obtaining subunit 2335, the second processing subunit 2336, the sixth determining subunit 2337, and the seventh determining subunit 2338, refer to operation S302 in the embodiment corresponding to FIG. 8. Details are not described herein again.

Referring to FIG. 11 again, the shard obtaining module 21 may include: a shard obtaining unit 211, a second processing unit 212, and a third processing unit 213.

The shard obtaining unit 211 is configured to obtain a program shards initiated by the service device, and package the program shard into a pending block.

The second processing unit 212 is configured to perform consensus processing on the pending block to obtain a consensus result, and chain the pending block in response to that the consensus result is a consensus success result.

The third determining unit 213 is configured to: in response to that the pending block is successfully chained, determine the program shard as an on-chain program shard, and obtain the on-chain program shard.

For implementations of specific functions of the shard obtaining unit 211, the second processing unit 212, and the third determining unit 213, refer to operation S301 in the embodiment corresponding to FIG. 8. Details are not described herein again.

It can be learned from the above that when the storage capacity occupied by the intermediate code corresponding to the smart contract is greater than or equal to the block storage capacity, by transmitting the A program shards to a blockchain node respectively, the blockchain node can still assemble a complete intermediate code, and then run the complete intermediate code (that is, run the intermediate code corresponding to the smart contract). Therefore, according to this application, the storage capacity occupied by the intermediate code corresponding to the smart contract is not limited, and applicability of deployment of the smart contract can be improved. In addition, according to this application, the intermediate code corresponding to the smart contract can be prevented from being pre-installed on a blockchain node, the intermediate code corresponding to the smart contract can be prevented from being approved manually, efficiency of installation of the smart contract can be improved, and a manual approval error can be avoided.

FIG. 12 is a schematic structural diagram of a computer device according to an embodiment of this application. As shown in FIG. 12, the computer device 1000 may include: at least one processor 1001, for example, a central processing unit (CPU), at least one network interface 1004, a user interface 1003, a memory 1005, and at least one communication bus 1002. The communications bus 1002 is configured to implement connection and communication between these components. In some embodiments, the user interface 1003 may include a display and a keyboard. In some embodiments, the user interface 1004 may include a standard wired interface and a wireless interface (for example, a wireless fidelity (WI-FI) interface). The memory 1005 may be a high-speed random access memory (RAM), or may be a non-volatile memory, for example, at least one magnetic disk memory. In some embodiments, the memory 1005 may be at least one storage apparatus located remotely from the foregoing processor 1001. As shown in FIG. 12, the memory 1005 used as a computer storage medium may include an operating system, a network communication module, a user interface module, and a computer program.

In the computer device 1000 shown in FIG. 12, the network interface 1004 may provide a network communication function. The user interface 1003 is mainly configured to provide an interface for a user to input. The processor 1001 may be configured to call a computer program stored in the memory 1005 to perform implementations provided in various operations in FIG. 3 or FIG. 8. For details, refer to the implementations provided in the operations. Details are not described herein again.

The computer device 1000 described in this embodiment of this application may perform the descriptions of the data processing method or apparatus in various embodiments hereinbefore. Details are not described herein again. In addition, the description of beneficial effects of the same method are not described herein again.

An embodiment of this application further provides a computer-readable storage medium. The computer-readable storage medium stores a computer program, and the computer program implements the descriptions of the blockchain-based data processing method or apparatus in various embodiments hereinbefore when executed by a processor. Details are not described herein again. In addition, the description of beneficial effects of the same method are not described herein again.

The foregoing computer-readable storage medium may be a data processing apparatus provided in any of the foregoing embodiments or an internal storage unit of the foregoing computer device, for example, a hard disk or a memory of the computer device. The computer-readable storage medium may be an external storage device of the computer device, for example, a plug-in hard disk, a smart media card (SMC), a secure digital (SD) card, or a flash card equipped on the computer device. Further, the computer-readable storage medium may further include both the internal storage unit and the external storage device of the computer device. The computer-readable storage medium is configured to store the computer program and other programs and data that are required by the computer device. The computer-readable storage medium may be further configured to temporarily store data that has been outputted or is to be outputted.

The embodiments of this application further provide a computer program product, including a computer program. The computer program is stored in a computer-readable storage medium. A processor of a computer device reads the computer program from the computer-readable storage medium, and the processor executes the computer program, whereby the computer device may perform the descriptions of data processing method or apparatus in various embodiments hereinbefore. Details are not described herein again. In addition, the description of beneficial effects of the same method are not described herein again.

Terms "first", "second", and the like in the specification, claims, and the drawings in the embodiments of this application are used for distinguishing different objects instead of describing a specific sequence. In addition, the terms "include" and any variation thereof are intended to cover a non-exclusive inclusion. For example, processes, methods, apparatuses, products, or devices including a series of operations or units are not limited to the listed operations or modules, but instead, include operations or modules not listed, or include other operations or units inherent in these processes, methods, apparatuses, products, or devices.

A person of ordinary skill in the art may realize that operations of units and algorithms of various examples described with reference to the embodiments disclosed in this specification can be implemented in electronic hardware, computer software, or a combination of the electronic hardware and the computer software. To clearly describe the interchangeability of hardware and software, the compositions and operations of various examples have been generally described in terms of functionality in the description. Whether the functions are executed in a mode of hardware or software depends on particular applications and design constraint conditions of the technical solutions. Those skilled in the art may use different methods to implement the described functions for each particular application, but it is not to be considered that this implementation goes beyond the scope of this application.

What is disclosed above is merely exemplary embodiments of this application, and certainly is not intended to limit the scope of the claims of this application. Therefore, equivalent variations made in accordance with the claims of this application shall fall within the scope of this application.

## Claims

1. A blockchain-based data processing method, performed by a service device, and comprising:
performing splitting processing on a first intermediate code corresponding to a smart contract to obtain A byte arrays, A being a positive integer greater than 1;
generating A program shards according to indices of the A byte arrays, a total shard quantity A, and the A byte arrays, each byte array corresponding to one program shard; and
transmitting the A program shards to a blockchain network to enable a blockchain node in the blockchain network to chain the A program shards to form A chained program shards, in order to generate a second intermediate code.

2. The method according to claim 1, wherein the performing splitting processing on a first intermediate code corresponding to a smart contract to obtain A byte arrays comprises:
performing encoding processing on a source code corresponding to the smart contract to obtain the first intermediate code corresponding to the smart contract, and obtaining a storage capacity occupied by the first intermediate code corresponding to the smart contract;
obtaining a block storage capacity, and comparing the storage capacity occupied by the first intermediate code corresponding to the smart contract with the block storage capacity, the block storage capacity representing a storage capacity of a block in the blockchain; and
in response to that the storage capacity occupied by the first intermediate code corresponding to the smart contract is equal to or greater than the block storage capacity, performing the splitting processing on the first intermediate code corresponding to the smart contract according to the block storage capacity, to obtain the A byte arrays.

3. The method according to claim 1 or 2, wherein the A byte arrays comprise a byte array B_{c}, the byte array B_{c} corresponds to a program shard D_{c}, c is a positive integer, and c is less than or equal to A;
generating the program shard D_{c} according to an index of the byte array B_{c}, the total shard quantity A, and the byte array B_{c} comprises:
generating the index corresponding to the byte array B_{c} according to an array position of the byte array B_{c} in the A byte arrays;
determining a check scope, and determining an associated byte array associated with the byte array B_{c} in the A byte arrays according to the check scope, the associated byte array comprising one or more byte arrays;
performing concatenation processing on an index corresponding to the associated byte array, the total shard quantity A, and the associated byte array to obtain an associated shard data structure;
determining a check code corresponding to the associated shard data structure as a check code corresponding to the byte array B_{c}; and
generating the program shard D_{c} according to the index of the byte array B_{c}, the total shard quantity A, the byte array B_{c}, and the check code corresponding to the byte array B_{c}.

4. The method according to claim 3, wherein the determining an associated byte array associated with the byte array B_{c} in the A byte arrays according to the check scope comprises:
in response to that the check scope is a shard-wise check scope, determining the byte array B_{c} in the A byte arrays as the associated byte array associated with the byte array B_{c}; and
the performing concatenation processing on an index corresponding to the associated byte array, the total shard quantity A, and the associated byte array, to obtain an associated shard data structure comprises:
performing concatenation processing on the index corresponding to the byte array B_{c}, the total shard quantity A, and the byte array B_{c}, to obtain the associated shard data structure.

5. The method according to claim 3, wherein the determining an associated byte array associated with the byte array B_{c} in the A byte arrays according to the check scope comprises:
in response to that the check scope is a group-wise check scope, performing grouping processing on the A byte arrays according to array positions respectively corresponding to the A byte arrays, to obtain E byte array sets, E being a positive integer greater than 1, and E being less than A;
determining a byte array set comprising the byte array B_{c} in the E byte array sets as the associated byte array associated with the byte array B_{c}, the byte array set comprising the byte array B_{c} having F byte arrays;
the performing concatenation processing on an index corresponding to the associated byte array, the total shard quantity A, and the associated byte array, to obtain an associated shard data structure comprises:
obtaining the F byte arrays from the byte array set comprising the byte array B_{c}, F being a positive integer, and F being less than A; and
performing concatenation processing on indices corresponding to the F byte arrays, the total shard quantity A, and the F byte arrays, to obtain the associated shard data structure.

6. The method according to claim 3, wherein the determining an associated byte array associated with the byte array B_{c} in the A byte arrays according to the check scope comprises:
in response to that the check scope is an overall check scope, determining the A byte arrays as the associated byte array associated with the byte array B_{c}; and
the performing concatenation processing on an index corresponding to the associated byte array, the total shard quantity A, and the associated byte array, to obtain an associated shard data structure comprises:
performing concatenation processing on the indices respectively corresponding to the A byte arrays, the total shard quantity A, and the A byte arrays, to obtain the associated shard data structure.

7. The method according to any one of claims 3 to 6, further comprising:
performing hash processing on the associated shard data structure to obtain a hash value of the associated shard data structure, and determining the hash value as the check code of the associated shard data structure; or
obtaining a device private key of the service device, performing signature processing on the associated shard data structure by using the device private key to obtain a signature value of the associated shard data structure, and determining the signature value as the check code of the associated shard data structure.

8. A blockchain-based data processing method, performed by a blockchain node, and comprising:
obtaining on-chain program shards that are initiated by a service device, and obtaining a total shard quantity A from the on-chain program shards, A being a positive integer greater than 1, the service device being configured to perform splitting processing on a first intermediate code corresponding to a smart contract to obtain A byte arrays, and each byte array corresponding to one program shard; and
counting a total quantity of the on-chain program shards, and performing assembling processing on byte arrays respectively comprised in the A program shards by using indices respectively comprised in the A program shards in response to that the total quantity is equal to the total shard quantity A, to obtain a second intermediate code.

9. The method according to claim 8, further comprising:
performing validity check on each program shard according to a check code comprised in each program shard to obtain a check result; and
in response to that A check results are all check success results, storing the second intermediate code, the A check results being all check success results indicating that the second intermediate code is the same as the first intermediate code corresponding to the smart contract.

10. The method according to claim 9, wherein the A program shards comprise a program shard Gₕ, h is a positive integer, and h is less than or equal to A; performing validity check on the program shard Gₕ according to a check code comprised in the program shard Gₕ to obtain a check result Iₕ comprises:
determining a check scope, and determining an associated program shard associated with the program shard Gₕ in the A program shards according to the check scope, the associated program shard comprising one or more program shards;
performing concatenation processing on an index comprised in the associated program shard, the total shard quantity A, and a byte array comprised in the associated program shard to obtain a to-be-checked shard data structure; and
determining the check result Iₕ according to the to-be-checked shard data structure and the check code comprised in the program shard Gₕ.

11. The method according to claim 10, wherein the determining an associated program shard associated with the program shard Gₕ in the A program shards according to the check scope comprises:
in response to that the check scope is a shard-wise check scope, determining the program shard Gₕ in the A program shards as the associated program shard associated with the program shard Gₕ;
in response to that the check scope is an overall check scope, determining the A program shards as the associated program shard associated with the program shard Gₕ;
in response to that the check scope is a group-wise check scope, obtaining an index group carried in the check code comprised in the program shard Gₕ, the index group comprising one or more indices, and the index group comprising an index in the program shard Gₕ; and
determining a program shard corresponding to the index group in the A program shards as the associated program shard associated with the program shard Gₕ.

12. The method according to claim 10 or 11, wherein the determining the check result Iₕ according to the to-be-checked shard data structure and the check code comprised in the program shard Gₕ comprises:
in response to that the check code comprised in the program shard Gₕ is a hash value, performing hash processing on the to-be-checked shard data structure to obtain a to-be-checked hash value;
comparing the to-be-checked hash with the check code comprised in the program shard Gₕ;
in response to that the to-be-checked hash value is the same as the check code comprised in the program shard Gₕ, determining a check success result as the check result Iₕ; and
in response to that the to-be-checked hash value is different from the check code comprised in the program shard Gₕ, determining a check failure result as the check result Iₕ.

13. The method according to claim 10 or 11, wherein the determining the check result Iₕ according to the to-be-checked shard data structure and the check code comprised in the program shard Gₕ comprises:
in response to that the check code comprised in the program shard Gₕ is a signature value, obtaining a device public key of the service device;
performing signature verification processing on the check code comprised in the program shard Gₕ by using the device public key, to obtain a signature verification result;
in response to that the signature verification result is a signature verification success result, determining a check success result as the check result Iₕ; and
in response to that the signature verification result is a signature verification failure result, determining a check failure result as the check result Iₕ.

14. The method according to any one of claims 8 to 13, wherein the obtaining on-chain program shards that are initiated by a service device comprises:
obtaining a program shard initiated by the service device, and packaging the program shard into a pending block;
performing consensus processing on the pending block to obtain a consensus result, and chaining the pending block in response to that the consensus result is a consensus success result; and
in response to that the pending block is successfully chained, determining the program shard as an on-chain program shard, and obtaining the on-chain program shard.

15. A blockchain-based data processing apparatus, running on a service device, and comprising:
a code processing module, configured to perform splitting processing on a first intermediate code corresponding to a smart contract to obtain A byte arrays, A being a positive integer greater than 1;
a shard generating module, configured to generate A program shards according to indices of the A byte arrays, a total shard quantity A, and the A byte arrays, each byte array being respectively corresponding to one program shard; and
a shard transmitting module, configured to transmit the A program shards to a blockchain network to enable a blockchain node in the blockchain network to chain the A program shards to form A chained program shards, in order to generate a second intermediate code.

16. A blockchain-based data processing apparatus, running on a blockchain node, and comprising:
a shard obtaining module, configured to obtain on-chain program shards that are initiated by a service device, and obtain a total shard quantity A from the on-chain program shards, A being a positive integer greater than 1, the service device being configured to perform splitting processing on a first intermediate code corresponding to a smart contract to obtain A byte arrays, and each byte array corresponding to one program shard; and
an array assembly module, configured to count a total quantity of the on-chain program shards, and perform assembling processing on byte arrays respectively comprised in the A program shards by using indices respectively comprised in the A program shards in response to that the total quantity is equal to the total shard quantity A, to obtain a second intermediate code.

17. A computer device, comprising: a processor, a memory, and a network interface,
the processor being connected to the memory and the network interface, the network interface being configured to provide a data communication function, the memory being configured to store a computer program, and the processor being configured to call the computer program to enable the computer device to perform the blockchain-based data processing method according to any one of claims 1 to 14.

18. A computer-readable storage medium, having a computer program stored therein, and the computer program being adapted to be loaded and executed by a processor to enable a computer device having the processor to perform the blockchain-based data processing method according to any one of claims 1 to 14.

19. A computer program product, comprising a computer program, the computer program being stored in a computer-readable storage medium, and the computer program being adapted to be read and executed by a processor to enable a computer device having the processor to perform the blockchain-based data processing method according to any one of claims 1 to 14.
